(19) **Europäisches Patentamt**
**European Patent Office**
**Office européen des brevets**

(11) **EP 2 951 628 B1**

(12) **EUROPEAN PATENT SPECIFICATION**

(45) Date of publication and mention
of the grant of the patent:
**14.11.2018 Bulletin 2018/46**

(21) Application number: **14704272.5**

(22) Date of filing: **31.01.2014**

(51) Int Cl.:
***G02B 6/293*** (2006.01)

(86) International application number:
**PCT/US2014/014310**

(87) International publication number:
**WO 2014/121144 (07.08.2014 Gazette 2014/32)**

(54) **COUPLED WAVEGUIDES FOR SLOW LIGHT SENSOR APPLICATIONS**

GEKOPPELTE WELLENLEITER FÜR LANGSAME LICHTSENSORANWENDUNGEN

GUIDES D'ONDES COUPLÉS POUR APPLICATIONS DE CAPTEUR DE LUMIÈRE LENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2013 US 201361759979 P
15.02.2013 US 201361765288 P**

(43) Date of publication of application:
**09.12.2015 Bulletin 2015/50**

(73) Proprietor: **The Board of Trustees of the Leland
Stanford
Junior University
Palo Alto, CA 94306-1106 (US)**

(72) Inventors:
• **GUO, Wengiong
Stanford, CA 94305 (US)**
• **DIGONNET, Michel, J.F.
Palo Alto, CA 94306 (US)**

(74) Representative: **Martin, Philip John
Marks & Clerk LLP
62-68 Hills Road
Cambridge
CB2 1LA (GB)**

(56) References cited:
**GB-A- 2 155 624         US-A- 4 775 214
US-A1- 2012 183 251**

• **PENG C ET AL: "ROTATION SENSING BASED ON
A SLOW-LIGHT RESONATING STRUCTURE
WITH HIGH GROUP DISPERSION", APPLIED
OPTICS, OPTICAL SOCIETY OF AMERICA,
WASHINGTON, DC; US, vol. 46, no. 19, 1 July 2007
(2007-07-01), pages 4125-4131, XP001542687,
ISSN: 0003-6935, DOI: 10.1364/AO.46.004125**
• **SUMETSKY M: "Uniform coil optical resonator
and waveguide: transmission spectrum,
eigenmodes, and dispersion relation", OPTICS
EXPRESS, OSA (OPTICAL SOCIETY OF
AMERICA), WASHINGTON DC, (US), vol. 13, no.
11, 30 May 2005 (2005-05-30), pages 4331-4340,
XP002410198, ISSN: 1094-4087, DOI:
10.1364/OPEX.13.004331**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

BACKGROUND

Photonic structures supporting slow light are a significant topic of interest, in part because many important applications benefit from the ability to control the group velocity of light. Although record group velocities of meters per second can be achieved using interference at the electronic level (material slow light) (see, L. V. Hau, S. E. Harris, Z. Dutton, and C. H. Behroozi, "Light speed reduction to 17 metres per second in an ultracold atomic gas," Nature Vol. 397, 594 (1999)), the main practical slow-light structures that have emerged to date utilize interference between optical waves (structural slow light) because they are generally more stable and practical.

The most prominent of these devices are coupled resonant optical waveguides (CROWs) (see, e.g., F. Morichetti, A. Canciamilla, C. Ferrari, A. Samarelli, M. Sorel, and A. Melloni, "Travelling-wave resonant four-wave mixing breaks the limits of cavity-enhanced all-optical wavelength conversion," Nature Comm. Vol. 2, 296 (May 2011); J.K.S. Poon, J. Scheuer, S. Mookherjea, G.T. Paloczi, Y.Y. Huang, and A. Yariv, Matrix analysis of microring coupled-resonator optical waveguides, Opt. Express Vol. 12, No. 1, 90-103 (January 2004); F. Morichetti, A. Melloni, A. Breda, A. Canciamilla, C. Ferrari and M. Martinelli, "A reconfigurable architecture for continuously variable optical slow-wave delay lines," Opt. Express Vol. 15, No. 25, 17273-17282 (December 2007); . K.S. Poon, J. Scheuer, Y. Xu, and A. Yariv, "Designing coupled-resonator optical waveguide delay lines," J. Opt. Soc. Am. B Vol. 21, No. 9, 1665-1673 (September 2004); F. Xia, L. Sekaric, and Y. Vlasov, "Ultracompact optical buffers on a silicon chip," Nature Photonics Vol. 1, 65-71 (January 2007); T. Barwicz, M. A. Popovi'c, M.R. Watts, P.T. Rakich, E.P. Ippen, and H.I. Smith, "Fabrication of Add-Drop Filters Based on Frequency-Matched Microring Resonators," J. of Lightwave Technol. Vol. 24, No. 5, 2207-2218 (May 2006); B.E. Little, S.T. Chu, P.P. Absil, J.V. Hryniewicz, F.G. Johnson, F. Seiferth, D. Gill, V. Van, O. King, and M. Trakalo, "Very high-order microring resonator filters for WDM applications," IEEE Photonics Technol. Lett. Vol. 16, No. 10, 2137-2139 (October 2004); T. Lei, and A.W. Poon, "Modeling of coupled-resonator optical waveguide (CROW) based refractive index sensors using pixelized spatial detection at a single wavelength," Opt. Express Vol. 19, No. 22, 22227-22241 (October 2011)), which have been investigated for applications as varied as wavelength converters (F. Morichetti, A. Canciamilla, C. Ferrari, A. Samarelli, M. Sorel, and A. Melloni, "Travelling-wave resonant four-wave mixing breaks the limits of cavity-enhanced all-optical wavelength conversion," Nature Comm. Vol. 2, 296 (May 2011)), delay lines and buffers (F. Morichetti, A. Melloni, A. Breda, A. Canciamilla, C. Ferrari and M. Martinelli, "A reconfigurable architecture for continuously variable optical slow-wave delay lines," Opt. Express Vol. 15, No. 25, 17273-17282 (December 2007); . K.S. Poon, J. Scheuer, Y. Xu, and A. Yariv, "Designing coupled-resonator optical waveguide delay lines," J. Opt. Soc. Am. B Vol. 21, No. 9, 1665-1673 (September 2004); F. Xia, L. Sekaric, and Y. Vlasov, "Ultracompact optical buffers on a silicon chip," Nature Photonics Vol. 1, 65-71 (January 2007)) for communication and optical computing, add-drop filters (T. Barwicz, M. A. Popovi'c, M.R. Watts, P.T. Rakich, E.P. Ippen, and H.I. Smith, "Fabrication of Add-Drop Filters Based on Frequency-Matched Microring Resonators," J. of Lightwave Technol. Vol. 24, No. 5, 2207-2218 (May 2006)) and WDM filters (B.E. Little, S.T. Chu, P.P. Absil, J.V. Hryniewicz, F.G. Johnson, F. Seiferth, D. Gill, V. Van, O. King, and M. Trakalo, "Very high-order microring resonator filters for WDM applications," IEEE Photonics Technol. Lett. Vol. 16, No. 10, 2137-2139 (October 2004)), and a very wide range of sensors (T. Lei, and A.W. Poon, "Modeling of coupled-resonator optical waveguide (CROW) based refractive index sensors using pixelized spatial detection at a single wavelength," Opt. Express Vol. 19, No. 22, 22227-22241 (October 2011); M.J.F. Digonnet, H. Wen, M.A. Terrel, and S. Fan, "Slow Light in Fiber Sensors," in Advances in Slow and Fast Light V, Photonics West, San Francisco, California, SPIE Proc. Vol. 8273, 82730W (January 2012); H. Wen, G. Skolianos, S. Fan, M. Bernier, R. Vallée, and M.J.F. Digonnet, "Slow-light fiber-Bragg-grating strain sensor with a 280-femtostrain/√Hz resolution," submitted to J. of Lightwave Technol. (2012); H. Wen, M. Terrel, S. Fan, and M.J.F. Digonnet, "Sensing with slow light in fiber Bragg gratings," IEEE Sensors J. Vol. 12, No. 1, 156-163 (January 2012); C. Delezoide, et al., "Vertically coupled polymer microracetrack resonators for label-free biochemical sensors," Photonics Technol. Lett. Vol. 24, No. 4, 270-272 (February 2012)). CROWs possess a number of optical properties not readily available in single resonators such as ring resonators, including the ability to generate slow light over a wide bandwidth.

Also of note is the coil optical resonator (COR) proposed by Sumetsky (see, M. Sumetsky, "Optical fiber microcoil resonator," Opt. Express Vol. 12, No.10, 2303-2316 (May 2004); M. Sumetsky, "Uniform coil optical resonator and waveguide: transmission spectrum, eigenmodes, and dispersion relation," Opt. Express Vol. 13, No. 11, 4331-4340 (2005); M. Sumetsky, Y. Dulashko, and M. Fishteyn, "Demonstration of a multi-turn microfiber coil resonator," In Postdeadline papers, Proc. of Optical Fiber Comm. Conf. 2007, paper PDP46), which consists of a waveguide wrapped in a three-dimensional coil with distributed coupling between loops. Depending on the number of loops in the coil, CORs exhibit intriguing resonant properties similar to CROWs or ring resonators, while offering a smaller footprint than planar coupled devices. For example, such structures exhibit a group delay that depends critically on the coupling coefficient $\kappa$, exhibits eigenmodes, and can have properties that can be widely tailored. However, being three-dimensional, they are inherently difficult to fabricate (see, M. Sumetsky, Y. Dulashko, and M. Fishteyn, "Demonstration of a multi-turn

**EP 2 951 628 B1**

microfiber coil resonator," in Postdeadline papers, Proc. of Optical Fiber Comm. Conf. 2007, paper PDP46).

SUMMARY

The invention is set out in the independent claims. Preferred embodiments of the invention are set out in the dependent claims.

In certain embodiments, an optical device comprises at least one optical waveguide comprising a plurality of elongate portions. Light propagates sequentially and generally along the elongate portions. At least two elongate portions of the plurality of elongate portions are generally planar with one another and are adjacent and generally parallel to one another. The at least two elongate portions are optically coupled to one another such that the light is coupled between the at least two elongate portions in a direction generally perpendicular to the at least two elongate portions as the light propagates generally along the at least two elongate portions.

In certain embodiments, the at least one optical waveguide can comprise a spiral optical waveguide, while in other certain examples, the at least one optical waveguide can comprise a plurality of nested optical waveguides. The at least one optical waveguide can comprise a generally circular, rectangular, or square shape, or can comprise an Archimedean spiral shape. The at least two elongate portions can be substantially straight and have substantially equal lengths. The plurality of elongate portions can further comprise two or more elongate portions that are curved and have substantially different lengths. The two or more elongate portions can have substantially matching phase shifts. The substantially straight at least two elongate portions can have a first coupling coefficient between them, and the curved two or more elongate portions can have a second coupling coefficient between them, wherein the second coupling coefficient at a wavelength of the light is lower than the first coupling coefficient at the wavelength of the light. The plurality of elongate portions can comprise two or more elongate portions that are curved and have substantially different lengths and have substantially equal optical lengths.

The direction generally perpendicular to the at least two elongate portions can be generally planar with the at least two elongate portions. The optical device can comprise at least one region between the at least two elongate portions, wherein the at least one region comprises a material configured to provide a predetermined coupling coefficient between the at least two elongate portions in the direction generally perpendicular to the at least two elongate portions. The at least one optical waveguide can comprise a single-mode waveguide.

In certain embodiments, an optical device comprises at least one optical waveguide comprising at least a first elongate portion and a second elongate portion that is adjacent and generally parallel to the first elongate portion. Light propagates into the first elongate portion, generally along the first elongate portion, into the second elongate portion, and generally along the second elongate portion. The first and second elongate portions are optically coupled to one another such that the light is coupled between the first and second elongate portions in a direction generally perpendicular to the first and second elongate portions as the light propagates generally along the first and second elongate portions. The light undergoes a first phase shift while propagating along the first elongate portion and a second phase shift while propagating along the second elongate portion, wherein the first phase shift is different from the second phase shift.

The first elongate portion can have a first length and the second elongate portion has a second length, wherein the first length is larger than the second length. The first and second elongate portions can be curved. A difference between the first phase shift and the second phase shift can be a non-zero multiple of $2\pi$. The optical device can comprise a material between the first elongate portion and the second elongate portion configured to reduce a coupling coefficient between the first elongate portion and the second elongate portion. The material can comprise air.

In certain embodiments, an optical device comprises at least one optical waveguide comprising a plurality of elongate portions. Light propagates sequentially and generally along the elongate portions, wherein at least two elongate portions of the plurality of elongate portions are generally planar with one another and are adjacent and generally parallel to one another. The at least two elongate portions are optically coupled to one another such that the light is coupled between the at least two elongate portions in a direction generally perpendicular to the at least two elongate portions as the light propagates generally along the at least two elongate portions. The at least one optical waveguide can extend across an area and comprises at least one portion configured to receive the light and to emit the light after propagating through the at least one optical waveguide, wherein the at least one portion is positioned at or near an outer boundary of the area.

The optical device can comprise a reflecting portion, wherein the received light propagates from the at least one portion through a first portion of the at least one optical waveguide, reflects from the reflecting portion, propagates through a second portion of the at least one optical waveguide, to the at least one portion. The at least one portion can comprise an input portion configured to receive the light and an output portion configured to emit the light after propagating through the at least one optical waveguide. The at least one optical waveguide can comprise a spiral optical waveguide wrapped through itself. The at least one optical waveguide can comprise a plurality of loops offset from one another. Two or more loops of the plurality of loops can cross one another.

In certain embodiments, a method of sensing a perturbation is provided. The method comprises inputting light

3

to at least one optical waveguide. The at least one optical waveguide comprises a plurality of elongate portions. The light propagates sequentially and generally along the elongate portions, and at least two elongate portions of the plurality of elongate portions are generally planar with one another and are adjacent and generally parallel to one another. The at least two elongate portions are optically coupled to one another such that the light is coupled between the at least two elongate portions in a direction generally perpendicular to the at least two elongate portions as the light propagates generally along the at least two elongate portions. The method further comprises detecting at least a portion of the light transmitted from the at least one optical waveguide.

The perturbation can comprise at least one of a change of a strain applied to at least a portion of the at least one optical waveguide, a change of a temperature applied to at least a portion of the at least one optical waveguide, and a change of a refractive index of at least a portion of the at least one optical waveguide. The light can be laser light having a wavelength at a transmission spectrum peak of the spiral optical waveguide or on a side of the transmission spectrum peak having a non-zero slope and having a linewidth narrower than a linewidth of the transmission spectrum peak.

BRIEF DESCRIPTION OF THE DRAWINGS

Figure 1A schematically illustrates an example optical device (e.g., coupled spiral resonator) in the form of an Archimedean spiral with $N=2$ arms with coupling between adjacent arms in accordance with certain embodiments described herein.

Figure 1B schematically illustrates an example optical device (e.g., coupled spiral resonator) in the form of an Archimedean spiral with $N=6$ arms with coupling between adjacent arms in accordance with certain embodiments described herein.

Figure 2 shows the calculated dependence of the peak (resonant) transmission on coupling coefficient for an Archimedean coupled spiral waveguide with $N = 2$ arms (with the inset showing a larger range of coupling coefficient) in accordance with certain embodiments described herein.

Figure 3 shows the calculated group delay spectrum at an asymptotically large resonant coupling coefficient for an Archimedean CSW with $N = 2$ arms and the same parameter values as in Figure 2 in accordance with certain embodiments described herein.

Figure 4A shows the calculated dependence on wavelength of the transmission and the group delay spectra of the Archimedean CSW of Figure 3 in the vicinity of a particular wavelength resonance.

Figure 4B shows the figure of merit (e.g., the product of the transmission and group delay spectra of Figure 4A) for the Archimedean spiral waveguide of Figure 3.

Figure 5 is a plot of the distributions of the effective indices in the first arm and the second arm that provide phase matching in the Archimedean spiral waveguide in accordance with certain embodiments described herein.

Figure 6 shows the transmission at a resonance wavelength as a function of coupling coefficient $\kappa$ for the Archimedean spiral waveguide with an effective index that varies along angular position $\theta$ in accordance with certain embodiments described herein.

Figures 7A and 7B show the calculated transmission spectrum and group delay spectrum, respectively, for the same phase-matched Archimedean CSW as in Figure 5, plotted at a resonant coupling coefficient.

Figure 8 schematically illustrates a generally rectangular CSW with $N = 4$ arms in accordance with certain embodiments described herein.

Figure 9 shows the calculated peak transmission at resonance versus the coupling coefficient $\kappa$ for a square CSW with $N = 2$ arms in accordance with certain embodiments described herein.

Figure 10 shows the calculated dependence on wavelength of the figure of merit (e.g., the product of the transmission and group delay spectra) for the square CSW of Figure 8.

Figure 11A shows a contour plot for transmission versus wavelength and normalized coupling coefficient $K$ for a square CSW in accordance with certain embodiments described herein.

Figure 11B shows the corresponding contour plot for the group delay of the square CSW of Figure 11A and for the same range of parameters. At the resonant coordinates identified in this figure, namely $\lambda = 1550.00$ nm and $\kappa S = 0.374$, the group delay goes to infinity.

Figure 11C shows the effective group delay as a function of wavelength and normalized coupling coefficient $K$ of the square CSW of Figure 11A.

Figure 11D shows a cut along the resonant wavelength in Figure 11C.

Figure 12 shows the peak transmission spectrum calculated for the lowest resonant coupling coefficient for a square CSW with $N = 2$ arms in accordance with certain embodiments described herein.

Figure 13 shows the group delay spectrum calculated for the lowest resonant coupling coefficient for the same square CSW with $N = 2$ arms as Figure 12 in accordance with certain embodiments described herein.

Figure 14 shows the group delay spectrum over a wider range of wavelengths than Figure 13 for the same square CSW with $N = 2$ arms as Figure 12 in accordance with certain embodiments described herein.

Figure 15 shows the effective group delay spectrum over the range of wavelengths of Figure 14 for the square CSW with $N = 2$ arms as Figure 12 in accordance with certain embodiments described herein.

Figure 16 shows the calculated dependence of the maximum figure of merit (e.g., the product of the transmission and group delay spectra) on the number of arms $N$ for a square CSW in accordance with certain embodiments described herein.

Figure 17 schematically illustrates an example sensor system comprising a light source, at least one optical coupler, a spiral optical waveguide, and at least one optical detector in accordance with certain embodiments described herein.

Figure 18 schematically illustrates two configurations of a coupled spiral waveguide or interferometer mounted on a center-supported disk or on an edge-supported disk.

Figure 19A schematically illustrates a generally rectangular CSW in which the waveguide is wrapped through itself in accordance with certain embodiments described herein.

Figure 19B schematically illustrates an example spiral waveguide having an output portion extending across the arms of the spiral waveguide in accordance with certain embodiments described herein.

Figure 20 schematically illustrates a generally rectangular CSW in which the spiral waveguide comprises a plurality of offset loops in accordance with certain embodiments described herein.

Figure 21 illustrates the contour plots for the group delay in the $B$-$K$ space from $N = 2$ to $N = 6$.

Figure 22 shows the dependence of the group delay spectrum on coupling for a spiral waveguide with 4 arms.

Figure 23 schematically illustrates a phase-matched Archimedean spiral waveguide with an even number of arms $N = 2n$ and coupling coefficients ($k_1$, $k_2$, $k_3$, $k_4$, ..., $k_{2n}$) that follow the sequence ($k$, 0, $k$, 0, ..., 0) in accordance with certain embodiments described herein.

Figure 24 shows the broadening in the transmission spectrum as the number of arms in the spiral optical waveguide is increased.

Figure 25 shows the 3-dB bandwidth of the transmission resonances that grows with an increasing number of arms, roughly as $N^{1/2}$.

Figure 26 schematically illustrates a spiral optical waveguide in which the effective index of the waveguide increases slightly from pair 1 to pair 2 to pair n in accordance with certain embodiments described herein.

Figure 27 shows the group index spectrum of the spiral waveguide of Figure 26 for $N = 2, 6, 10, 14,$ and 20.

Figure 28 shows the broadening of the group-delay spectra as a function of the number of arms $N$.

Figure 29 shows an example group-delay spectrum with strong, highly localized resonances.

Figure 30 schematically illustrates an example plurality of nested optical waveguides in accordance with certain examples described herein.

Figure 31 schematically illustrates a portion of an example nested waveguide structure at the coupler.

Figure 32 shows the simulated transmission at a resonance frequency of a nested structure with $N = 2$ single-mode waveguides (e.g., rings), as a function of the coupling coefficient $\mu$.

Figure 33 shows the transmission spectrum of the nested waveguide structure of Figure 32 operated at $\mu = \mu_{opt}$.

Figure 34 shows the simulated group delay experienced by light in the nested waveguide structure of Figure 32 as a function of optical wavelength, in the vicinity of the same resonance shown in Figure 33.

Figure 35 shows the product of the spectrum of Figure 33 with the spectrum of Figure 34.

## DETAILED DESCRIPTION

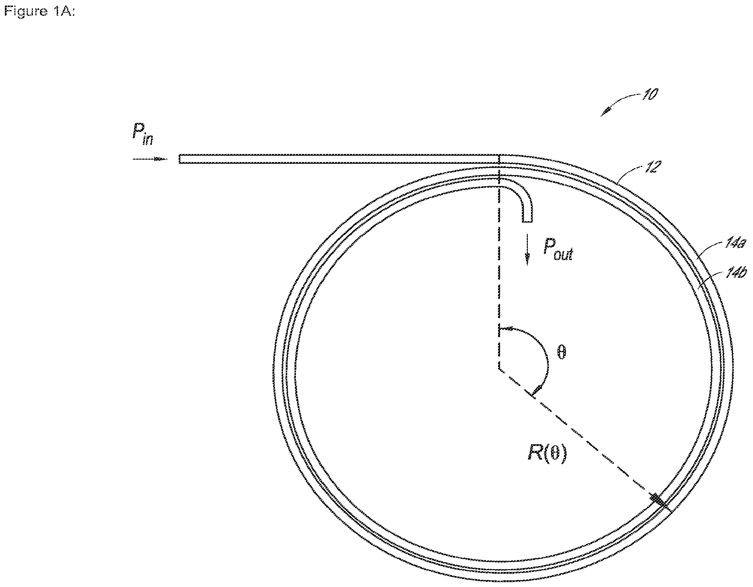

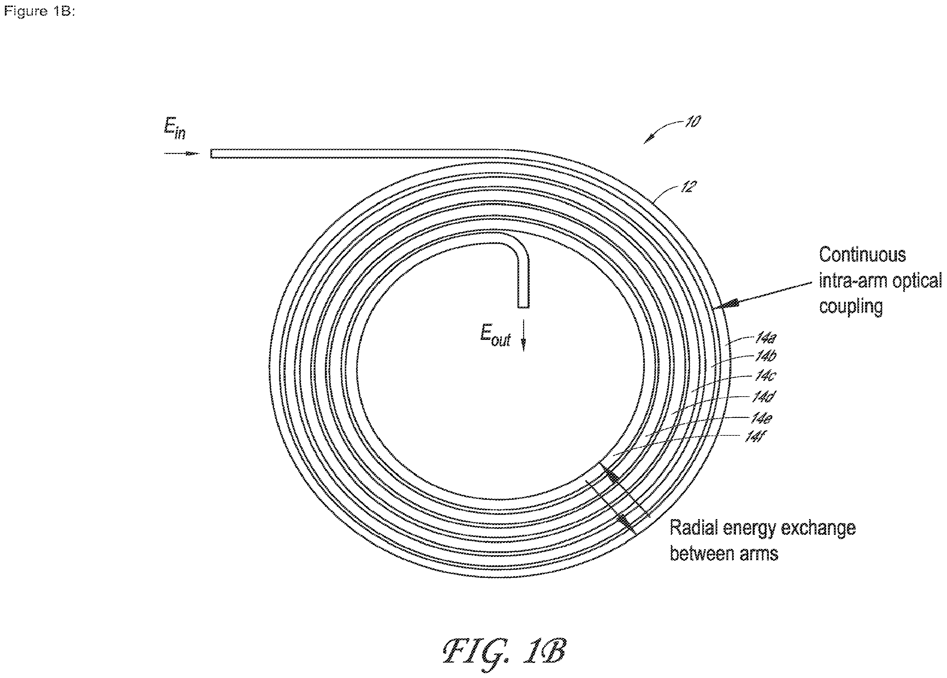

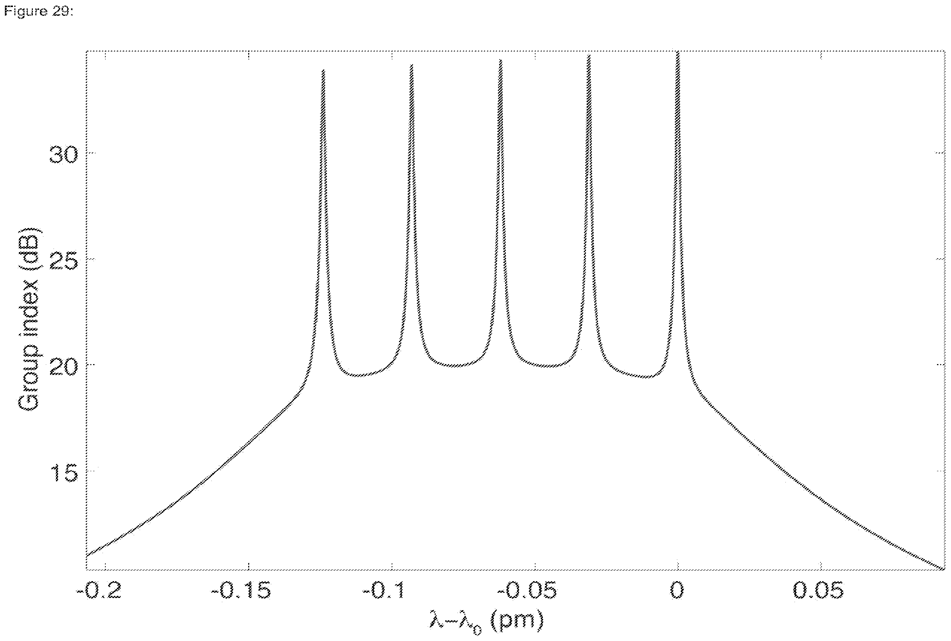

Certain embodiments described herein include a novel class of optical devices, which can alternatively be referred to as coupled spiral resonators, spiral interferometers, or coupled spiral waveguides (CSWs). In certain embodiments, the CSWs exhibit similar properties, as well as new functionalities, in a significantly smaller footprint than CROWs. Figure 1A schematically illustrates an example optical device 10 comprising at least one optical waveguide which can comprise a spiral optical waveguide 12 coiled into an Archimedean spiral with $N=2$ arms 14a, 14b with coupling between adjacent arms 14 in accordance with certain embodiments described herein. Figure 1B schematically illustrates an example optical device 10 comprising at least one optical waveguide that comprises a spiral optical waveguide 12 coiled into an Archimedean spiral with $N=6$ arms 14a-14f with coupling between adjacent arms 14 in accordance with certain embodiments described herein. Each example optical device 10 of Figures 1A and 1B comprises a spiral waveguide 12 (e.g., a planar waveguide folded, shaped, or formed in the shape of a spiral) comprising a plurality of elongate portions 14a, 14b, ... (which are also referred to herein as "arms" 14) through which light propagates sequentially from one portion to the next in a direction generally along the portions 14. As described more fully below, in certain examples, the at least one optical waveguide does not comprise a spiral optical waveguide 12. For example, as schematically illustrated in Figure 29, the at least one optical waveguide can comprise a plurality of nested optical waveguides 22.

The spiral waveguide 12 is coiled upon itself (e.g., can comprise a plurality of arms through which light propagates serially from one arm to the next in a direction generally along the arms, with two or more of the arms configured to be generally parallel to one another and adjacent to one another). Adjacent elongate portions 14 are optically coupled to one another such that light is coupled (e.g., continuously coupled) between the adjacent elongate portions 14 (e.g., side-coupled between the two substantially parallel and adjacent elongate portions) as it propagates along the spiral waveguide 12. This coupling allows at least a portion of the light to travel back and forth radially (e.g., in a direction generally perpendicular to the elongate portions). Substantially parallel and adjacent arms 14 can have a small enough spacing between them such that light is continuously coupled between the arms 14, as in a COR. However, unlike a COR, certain embodiments described herein comprise a waveguide 12 in which adjacent arms 14 are substantially planar with one another.

As used herein, the term "continuous coupling" has its broadest reasonable interpretation as understood by persons skilled in the art, including but not limited to, coupling that occurs along substantially the entire length of the elongate portion 14. For example, in certain embodiments, continuous coupling occurs along the entire length of the elongate portion 14 with a substantially constant coupling coefficient, while in certain other embodiments, the coupling occurs along the entire length of the elongate portion 14 with a coupling coefficient that varies with position along the elongate portion 14. In certain other embodiments, the coupling only occurs along predetermined regions of the elongate portions 14 with these regions spaced from one another by other regions with little or no coupling (which can be referred to as "discontinuous coupling").

As light propagates along the length of the spiral waveguide 12, it is coupled both inward (e.g., from the outer arms to the inner arms) and outward (from the inner arms to the outer arms), resulting in a mechanism akin to back-and-forth reflections between two mirrors that can lower the group velocity of the light. The salient differences with a COR are that (1) the spiral waveguide 12 of certain embodiments are two-dimensional structures and therefore much easier to fabricate; (2) the arms 14 of a spiral waveguide 12 have different lengths, which raises the question of whether the spiral waveguide 12 supports resonances, for what shapes and under what conditions; and (3) at least some of the coupling in a spiral waveguide 12 takes place between curved arms 14 of unequal lengths, which can frustrate coupling and reduce the strength of resonances.

The spiral waveguide 12 can have an Archimedean shape, as schematically illustrated by Figures 1A and 1B, or it can have any other shape, for example, a square or rectangular shape (discussed more fully below), triangular shape, hexagonal shape, elliptical shape, or less symmetric geometric patterns, or more arbitrary shapes, patterns, or designs. The corners of these shapes can be sharp (e.g., small radius of curvature) or rounded (e.g., large radius of curvature). The spiral waveguide 12 can be implemented with a large number of technologies, including but not limited to, optical nanowires, integrated-optic waveguides, photonic-bandgap structures utilizing periodic arrays of pegs, holes, or materials with different indices of refraction, on planar or non-planar substrates. The light input into the spiral waveguide 12 can be provided through an optical coupler, for example, a coupler made of planar waveguides or a fiber coupler, which couples the spiral waveguide 12 to a coherent light source (e.g., laser), or by a number of other methods. The output light from the spiral waveguide 12 can be collected by placing a detector at the output inside the spiral waveguide 12, or by a number of other methods, as discussed more fully below.

Structures compatible with certain embodiments described herein can be readily fabricated with conventional micro-fabrication techniques. For example, a silicon nitride waveguide 12 can be formed such that it is embedded in silicon oxide on a silicon wafer. Silicon nitride is particularly attractive because it has been shown to lead to waveguides with extremely low propagation loss (~0.7 dB/m) (see, J.F. Bauters, M.J.R. Heck, D.D. John, J.S. Barton, D.J. Blumenthal, and J.E. Bowers, "A comparison of approaches for ultra-low-loss waveguides," Optical Fiber Communication Conference and Exposition (OFC/NFOEC), 2012 *and the National Fiber Optic Engineers Conference).* In certain embodiments, the loss is kept low to achieve a very high finesse, or equivalently a high group index or a low group velocity.

There are a wide range of possible spiral shapes and configurations (single-pass, double-pass, spiral folded through itself, etc.) compatible with certain embodiments described herein. In addition, there is a large number of properties of interest (existence of resonance, resonance conditions, transmission spectrum, group velocity spectrum, dispersion, slow-light bandwidth, etc.) and an equally large number of design parameters that impact these properties (coupling coefficient, spiral length, arm spacing, radius of curvature, etc.). To elucidate some properties of waveguides 12 compatible with certain embodiments described herein (e.g., CSWs), the discussion below includes a theoretical study of two particular spiral waveguides 12, namely an Archimedean spiral waveguide 12 and a rectangular spiral waveguide 12. An Archimedean spiral (examples of which are shown schematically by Figures 1A and 1B) is of interest because it offers near optimum compactness and maximizes the radius of curvature of the waveguide 12. This feature can be important because it minimizes bending loss, which itself can be critical when attempting to achieve low group velocities. This disclosure presents a first theoretical study of this new type of interferometers, and shows that with suitable design they can indeed support light with very large group delays in a very small footprint, making them a viable competitor to existing CROW devices.

Model of Coupled Spiral Waveguides

For a given input electric field $E_{in}$ of angular frequency $\omega$, the complex output field $E_{out}$ of a coupled spiral waveguide (CSW) 12, and the complex field transmission $t = E_{out}/E_{in}$, can be modeled. The electric field along a CSW can be described by coupled differential equations similar to those previously derived for CORs (see, M. Sumetsky, "Uniform coil optical resonator and waveguide: transmission spectrum, eigenmodes, and dispersion relation," Opt. Express Vol. 13, No. 11, 4331-4340 (2005)), but with the important modification that the optical phase accumulates at different rates in each of the arms 14. The stationary electromagnetic field propagating along arm $j$ of the spiral ($j = 1$ corresponding to the first (input) arm, and $j = N$ to the last (output) arm) is expressed as $E_j(z) = U_j(z)\exp(i\beta z)\exp(i\omega t)$, where $U_j(z)$ is the wave amplitude, $\omega$ is the wave angular frequency, $t$ is time, and $z$ is the linear coordinate along the arm ($0 < z < S_j$, where $S_j$ is the perimeter of arm $j$). The complex propagation constant $\beta$ is:

$$\beta = \frac{2\pi n_{\text{eff}}}{\lambda} + i\frac{\alpha}{2} \tag{1}$$

where $\lambda = 2\pi c/\omega$ is the wavelength of the light in vacuum, $\alpha$ is the power loss coefficient of the waveguide mode (which for the purposes of this discussion is assumed to be the fundamental, linearly polarized mode), and $n_{eff}$ is the mode effective index. In cylindrical coordinates $(r, \theta)$ (see Figure 1), the coupled equations describing the evolution of these $N$ fields along the CSW are:

$$\frac{dU_1(\theta)}{d\theta} = i\beta R_1(\theta)U_1(\theta) + k_{2,1}(\theta)U_2(\theta)$$

$$\dots$$

$$\frac{dU_j(\theta)}{d\theta} = i\beta R_j(\theta)U_j(\theta) + k_{j-1,j}(\theta)U_{j-1}(\theta) + k_{j+1,j}(\theta)U_{j+1}(\theta)$$

$$\dots \tag{2}$$

$$\frac{dU_N(\theta)}{d\theta} = i\beta R_N(\theta)U_N(\theta) + k_{N-1,N}(\theta)U_{N-1}(\theta)$$

In each of these equations, the first term represents propagation (phase and amplitude) of the mode along arm $j$. It is proportional to $R_j(\theta)$, the radius of arm $j$, and accounts for the difference in propagation phase in the various arms. The second term describes coupling of light between arm $j$ and the prior arm $j - 1$, characterized by complex coupling coefficients $k_{j-1,j}$. For the first arm ($j = 1$, first equation) there is no prior arm, hence this term does not appear ($k_{0,1} = 0$). The third term describes coupling between arm $j$ and the next arm $j + 1$, characterized by coupling coefficients $k_{j,j+1}$. For the last arm ($j = N$, last equation) there is no next arm, hence this term is absent ($k_{N+1,N} = 0$). The coupling coefficients $k_{i,j}$ are in units of reciprocal radian. They can depend on $\theta$, for example if the spacing between the arms is not constant, or if the normalized frequency of the waveguide is a function of $\theta$. For energy to be conserved, whether the waveguide is lossy or lossless, Eqs. 2 must satisfy the condition $k_{j-1,j} = -k_{j,j-1}^*$. (See, Y. Murakami, "Coupling between curved dielectric waveguides," Appl. Opt. Vol. 19, 398-403 (1980).) The traditional coupling coefficients $\kappa_j$, in units of reciprocal length, are defined as $\kappa_j = k_j/R_j$, where (for energy conservation reasons) $R_j$ is the average radius of arm $j$.

The condition that the fields must be continuous at the junctures between adjacent arms imposes the $N - 1$ continuity relations:

$$U_{j+1}(0) = U_j(2\pi)e^{i\beta S_j} \tag{3}$$

The coupled equations (Eqs. 2) subject to these continuity conditions can be solved numerically, e.g., using a transfer matrix method (the approach used in the simulations reported here) or a Runge-Ketta method. Alternatively, for some simple configurations, closed-form expressions can be obtained for the transmission and group delay spectra, which yield useful insight into the interferometer behavior, including its resonance conditions.

To this end, consider the particular case of a spiral waveguide with $N = 2$ arms. The general solution of Eqs. 2 can then be expressed in the form:

$$U(\theta) = A(\theta)\exp\left(i\beta\int_0^\theta R_1(\varphi)d\varphi\right)$$

$$V(\theta) = B(\theta)\exp\left(i\beta\int_0^\theta R_2(\varphi)d\varphi\right)$$

$$(4)$$

so that the coupled equations and the continuity condition can be re-written as:

$$\frac{dA(\theta)}{d\theta} = k_1(\theta)B(\theta)\exp\left(+i\beta\int_0^\theta \Delta R(\varphi)d\varphi\right)$$

$$\frac{dB(\theta)}{d\theta} = k_2(\theta)A(\theta)\exp\left(-i\beta\int_0^\theta \Delta R(\varphi)d\varphi\right)$$

$$(5)$$

$$A(2\pi)\exp\left(i\beta\int_0^{2\pi} R_1(\varphi)d\varphi\right) = A(2\pi)\exp(i\beta S_1) = B(0)$$

$$(6)$$

$$S_1 = \int_0^{2\pi} R_1(\varphi)d\varphi$$

where $\Delta R(\varphi) = R_2(\varphi) - R_1(\varphi)$ and is the perimeter of the first arm. In Eq. 5, $\beta\Delta R(\varphi)d\varphi$ is the phase mismatch accumulated by the fields in arms 1 and 2 as the light propagates an angular distance $d\varphi$.

Properties of Archimedean CSW with Two Arms

$$R(\theta) = R_0 - \frac{a}{2\pi}\theta,$$

The shape of an Archimedean spiral waveguide is described by where $R_0$ is the spiral radius at the input port (0 = 0) and $a$ is the constant center-to-center arm spacing. In Eq. 5, $\Delta R(\varphi) = -a$ is then a constant. Straightforward manipulations of Eq. 5 subject to the continuity condition (Eq. 6) yields the field distribution along the spiral waveguide:

$$A(\theta) = \frac{C + a\beta/2}{k^*}\mu e^{i(C-a\beta/2)\theta} - \frac{C - a\beta/2}{k^*}v e^{-i(C+a\beta/2)\theta}$$

$$(7a)$$

$$B(\theta) = e^{-ia\beta\theta/2}\left(\mu e^{iC\theta} + v e^{-iC\theta}\right)$$

$$(7b)$$

where

$$\mu = \frac{1}{2}\frac{(C + a\beta/2)e^{-i2\pi C} + k^* e^{-i\beta S}}{Ce^{-i\beta S} - ik\sin(2\pi C)}$$

$$(8a)$$

$$v = \frac{1}{2}\frac{(C - a\beta/2)e^{i2\pi C} - k^* e^{-i\beta S}}{Ce^{-i\beta S} - ik\sin(2\pi C)}$$

$$(8b)$$

and

$$C = \sqrt{|k|^2 + (a\beta/2)^2}$$

$$(9)$$

is the effective coupling coefficient of the coupled arms, including the phase mismatch between them, represented by

the term $\alpha\beta/2$. This result can be easily interpreted: the effective coupling coefficient for two coupled waveguides with a propagation constant mismatch $\Delta\beta$ is $\sqrt{|\kappa|^2 + (\Delta\beta/2)^2}$. (See, Y. Murakami, "Coupling between curved dielectric waveguides," Appl. Opt. Vol. 19, 398-403 (1980); Y. Murakami and S. Sudo, "Coupling characteristics measurements between curved waveguides using a two-core fiber coupler," Appl. Opt. Vol. 20, 417-422 (1981).) By making the substitution $k = \kappa R_0$, where $R_0$ is (approximately) the average radius of the spiral waveguide, this expression gives the effective coupling coefficient in radian$^{-1}$ $k_{eq} \approx \sqrt{|k|^2 + (\Delta\beta R_0/2)^2}$. In an Archimedean spiral waveguide, the phase mismatch over an angular distance $\Delta\varphi$ is $\Delta\phi = \beta(R_1(\varphi) - R_2(\varphi))\Delta\varphi = \alpha\beta\Delta\varphi$. If the facing waveguides had a propagation mismatch $\Delta\beta$ but the same length, the phase mismatch over an angular distance would be $\Delta\phi = \Delta\beta R_0 \Delta\varphi$. Identifying the two expressions of $\Delta\phi$ yields $\Delta\beta R_0/2 = \alpha\beta/2$. Replacing this in the expression of $k_{eq}$ gives $k_{eq} \approx \sqrt{|k|^2 + (\alpha\beta/2)^2}$, which is identical to Eq. 9. The spiral waveguide behaves like a coupler with a phase mismatch per angular distance $\Delta\varphi$ of $\Delta\phi = \alpha\beta\Delta\varphi$.

The output field of the spiral waveguide is given by Eq. 7b evaluated at $\theta = 2\pi$, which gives the field transmission:

$$t = \frac{E_{out}}{E_{in}} = \frac{C + ik^* \sin(2\pi C)e^{-i\beta S}}{C - ik\sin(2\pi C)e^{+i\beta S}} e^{+i2\beta S} \qquad (10)$$

This expression is more complicated than the transmission of the COR with two loops because of the presence of phase mismatch. If we set $\alpha = 0$, in which case the spiral arms have equal lengths and the configuration is equivalent to a COR, then $C = k$ (see Eq. 9) and Eq. 10 reduces to the expression of the transmission of a COR with $N = 2$ loops (which can be calculated from Eq. 10 in M. Sumetsky, "Optical fiber microcoil resonator," Opt. Express Vol. 12, No.10, 2303-2316 (May 2004)).

The group delay spectrum of the spiral waveguide (e.g., interferometer) can be obtained from the output field (Eq. 10) by using the following equation (see, M. Sumetsky, "Uniform coil optical resonator and waveguide: transmission spectrum, eigenmodes, and dispersion relation," Opt. Express Vol. 13, No. 11, 4331-4340 (2005)):

$$\tau_g = \frac{n_{eff}}{c} \text{Im}\left[\frac{d\ln t}{d\beta}\right] \qquad (11)$$

and can be calculated by direct numerical evaluation of Eq. 11.

The expression of the transmission (Eq. 10) shows that if the spiral waveguide is lossless, $\beta$ is real (see Eq. 1), the numerator and denominator of Eq. 11 are complex conjugate of each other, and the output amplitude is unity, as in a COR with $N = 2$. This is a direct consequence of energy conservation. It can easily be shown from Eq. 10 that if the loss is low ($\alpha L_t \ll 1$, where $L_t$ is the total length of the spiral waveguide), the transmission exhibits resonances in both frequency and coupling, with resonant conditions given by:

$$\beta_\rho S = (p + \frac{1}{2})\pi \qquad (12a)$$

$$\text{sinc}(2\pi\sqrt{|k|^2 + (\alpha\beta_p/2)^2}) = \frac{e^{-\alpha S/2}}{2\pi k} \qquad (12b)$$

where $p$ is an integer, and S is the average length of the two arms. Unlike in a COR, the resonant values of the coupling coefficient of the spiral waveguide depend on two parameters, because in the CSW the phase mismatch couples $k$ and $\beta$. In the limit where there is no loss and where $k$ is so large that it dominates over the phase mismatch, $|k| \gg \alpha\beta_p/2$ and the solutions of Eq. 12b are $k_m = (4m+1)/4$.

To simulate the transmission and group index spectra of an Archimedean CSW, the coupled equations were solved in the following discussion using either the exact expressions or numerically with a transfer matrix approach. (See, H. Wen, G. Skolianos, M. J.F. Digonnet, and S. Fan, "Slow Light in Fiber Bragg Gratings," Photonics West, San Francisco, California, Proc. of SPIE Vol. 7949, 79490-E1-E11 (January 2011).) Simulations show that the power trans-

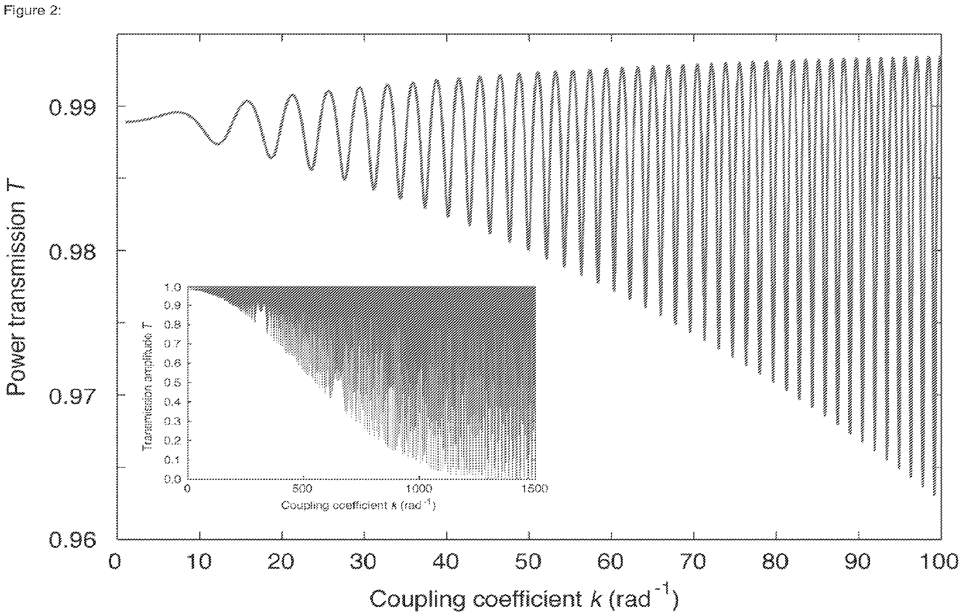

mission $T = |t|^2$ does indeed exhibit periodic resonances in frequency, and that the peak transmission on resonance depends strongly on the coupling coefficient. To illustrate and understand this dependence, Figure 2 shows the transmission calculated at a particular resonance ($\lambda$ = 1.550010968 $\mu$m) versus the coupling coefficient $k$ for an Archimedean spiral with two arms, an arm spacing $a$ = 4 $\mu$m, and an input radius $R_0$ = 5.598 mm. For the purposes of this discussion, the waveguide is assumed to carry a single mode and the waveguide is made of a silicon nitride core in a silica cladding (see, Y. Murakami, "Coupling between curved dielectric waveguides," Appl. Opt. Vol. 19, 398-403 (1980)) ($n_{eff}$ = 1.98), a technology that has been shown to yield the lowest reported value in a single-mode waveguide (a loss coefficient $\alpha$ = 0.16 m$^{-1}$ (see, J F. Bauters, M.J.R. Heck, D.D. John, J.S. Barton, D.J. Blumenthal, and J.E. Bowers, "A comparison of approaches for ultra-low-loss waveguides," Optical Fiber Communication Conference and Exposition (OFC/NFOEC), 2012 *and the National Fiber Optic Engineers Conference),* the value used in this discussion).

Figure 2 shows that the evolution with coupling coefficient $k$ of the transmission of this CSW, evaluated at a resonant wavelength. The transmission exhibits resonances at certain $k$ values, in accord with Eq. 12b. These resonances are weak for low coupling coefficients, and they increase monotonically as the coupling coefficient increases. The same dependence zoomed out to much higher values of $k$ is displayed in the inset of Figure 2. It shows that the transmission peaks eventually reach an asymptotic limit for very large $k$. The condition for resonance in $k$ (Eq. 12b) is in fact not satisfied until $k$ is very large, in the range of 1,000 rad$^{-1}$ or larger. In the lower-$k$ region where the resonance in $k$ is not met (i.e., Eq. 12b has no solution), the dips in Figure 2 have single minimum. In the larger-k region, Eq. 12b has solutions, and the dips in Figure 2 have two minima, as will be apparent in other figures further discussed below.

This strong dependence on coupling is a direct consequence of the geometrical constraint that coupling occurs between curved waveguides (e.g., curved portions of the spiral waveguide) of unequal lengths, unlike in a COR where it occurs between curved waveguides of equal length. As a result of this length difference, in an Archimedean CSW, the coupled modes accumulate a differential phase shift. Just like in a fiber coupler made of fibers with different propagation constants (see, A.L. Jones, "Coupling of optical fibers and scattering in fibers," J. Opt. Soc. Am. Vol. 55, No. 3, 261-269 (March 1965)), this phase mismatch prevents full coupling, which greatly reduces the efficacy with which light can be slowed down. Also as in a coupler with dissimilar waveguides, as $k$ is increased, the rate of coupling gradually reaches, then exceeds, the rate of phase-mismatch build-up between the coupled modes. Eventually $k$ is so large that over one coupling length $L_c = \pi/(2\kappa) \approx \pi R_0/(2k)$, the modes do not travel far enough to build up a significant phase mismatch, and full coupling takes place. In this limit, the coupling is no longer affected by the phase mismatch, and the resonances are very strong: the transmission peaks reach a very small asymptotic value independent of the resonant $k$ value (see inset in Figure 2). This explanation is congruent with the expression of the effective coupling coefficient $C = \sqrt{|k|^2 + (\pi a \beta)^2}$ (Eq. 9). When k << $\alpha\beta$/2, C $\approx$ $\alpha\beta$/2, the behavior of the CSW is dominated by the mismatch, coupling is very weak and so are the resonances. When $k$ >> $\alpha\beta$/2, coupling is strong (full exchange) and the transmission peaks are strong and independent of $k$. The condition $k$ >> $\alpha\beta$/2 can be equivalently written as a condition on the coupling length $L_c$ that quantifies the strength of the coupling between the arms, namely $L_c$ << $\lambda R/(2n_{eff}a)$. For example, for $R$ = 5 mm, $\lambda$ = 1.55 $\mu$m, $n_{eff}$ = 1.98, and a = 4 $\mu$m, the coupling length can be much smaller than ~489 $\mu$m, or 315 wavelengths. For a much smaller spiral waveguide with a radius $R$ = 50 $\mu$m, the coupling length decreases to about 3 wavelengths. In certain embodiments, the coupling of the light between the at least two elongate portions of the at least one optical waveguide corresponds to a coupling length less than 300 times a wavelength of the light, less than 100 times a wavelength of the light, less than 30 times a wavelength of the light, less than 10 times a wavelength of the light, less than 3 times a wavelength of the light, or less than a wavelength of the light.

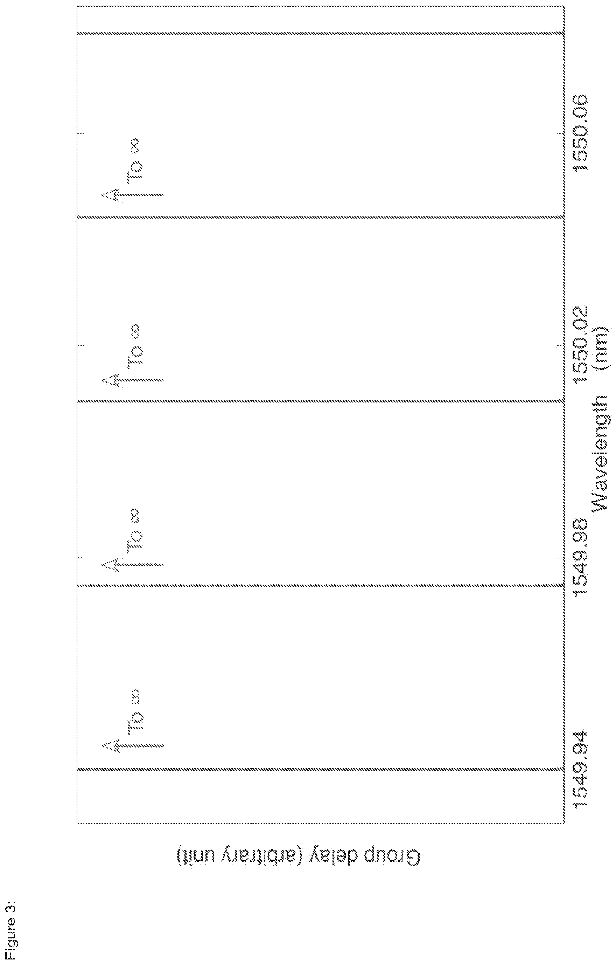

Figure 3 shows the group delay spectrum calculated for a large resonant coupling coefficient in the asymptotic region of the inset of Figure 2. The vertical axis of Figure 3 is not labeled because on resonance the group delay becomes infinite, even in the presence of loss, as it does in a COR. However, at these same resonance frequencies, the spiral waveguide's transmission is also resonant and equal to zero. The spiral waveguide device essentially delays all photons infinitely long, and no photons are available at the output to record this event. This ambiguity can be resolved by recognizing that for many applications, the metric that characterizes the efficacy of a device to slow down light is not the group index but the product of the group delay and the transmission, a quantity that can then be used as a figure of merit (see, H. Wen, G. Skolianos, S. Fan, M. Bernier, R. Vallée, and M.J.F. Digonnet, "Slow-light fiber-Bragg-grating strain sensor with a 280-femtostrain/√Hz resolution," submitted to J. of Lightwave Technol. (2012), where a simple derivation of this figure of merit can be found for a fiber Bragg grating (FBG) strain sensor utilizing slow-light resonances). It is easy to see how this derivation is applicable to many other interferometric sensors, whether two-wave interferometers (e.g., a Sagnac or a Mach-Zehnder interferometer) or multiple-wave interferometers (e.g., FBGs, CROWs, Fabry-Perot interferometers, or CSWs). This figure of merit also applies to quantify the signal-to-noise ratio (SNR) in other slow-light applications besides sensors, for example, optical delay lines. The physical reason is simply that any applications utilizing slow light measure an output power, and hence achieving a good SNR is provided by a high transmission (or reflection, as the case may be) as well as a large group delay.

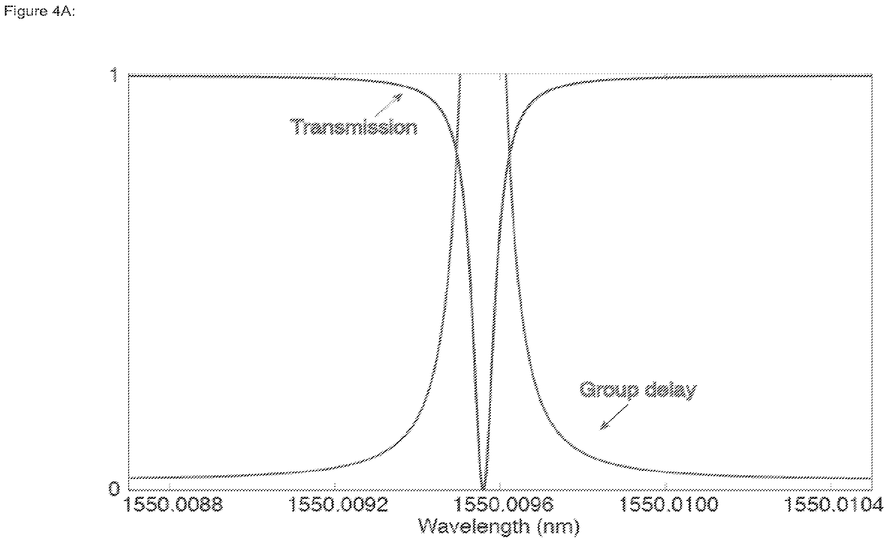

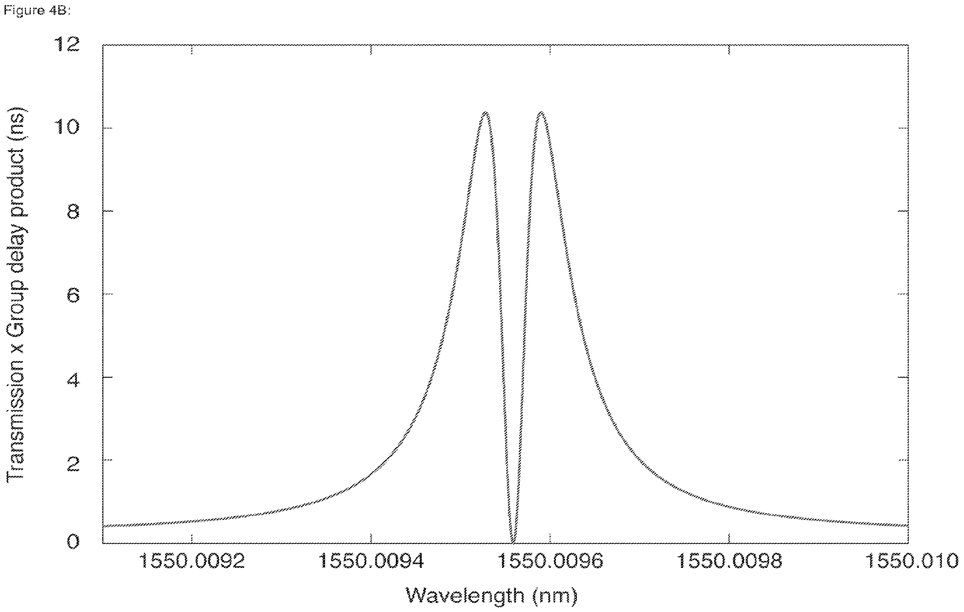

Figure 4A plots the transmission and the group delay spectra of the Archimedean CSW of Figure 3 in the vicinity of a particular wavelength resonance. These spectra were calculated for the same large (asymptotic) resonant $k$ value as in Figure 3. Figure 4B shows the figure of merit, namely the product of these two spectra. On resonance the group index goes to infinity but the transmission zero, but as shown in Figure 4A the transmission wins: the figure of merit is zero. The figure of merit exhibits two maxima of equal amplitude, one on each side of this zero. At the two wavelengths where these maxima occur, the sensitivity of the spiral to an external perturbation, for example a strain, is at a maximum. Note that the maximum $\tau_g T$ product is 10.4 ns. The delay through this spiral waveguide in the absence of coupling would be $\tau_0 = n_{eff}L_t/c = 460$ ps. The normalized slow-down (or slowing-down) factor is therefore $\tau_g T/\tau_0 = 10.4/0.46 = 22.6$. For comparison, the best figure of merit measured for the slow-light resonance of a strong, low-loss, 2-cm silica FBG is ~3.5 ns, for a $\tau_0$ of approximately 960 ps (see, H. Wen, G. Skolianos, S. Fan, M. Bernier, R. Vallée, and M. J. F. Digonnet, "Slow-light fiber-Bragg-grating strain sensor with a 280-femtostrain/√Hz resolution," submitted to J. of Lightwave Technol. (2012)). This corresponds to a slow-down factor of ~36, a little higher than for the Archimedean CSW because the FBG had a lower loss coefficient (0.1 m$^{-1}$). This quantitative comparison suggests, as expected, that the performance of a CSW can be at least comparable to that of other optical resonators.

In an Archimedean CSW, the resonance is close to its asymptotic maximum when $k$ is larger than ~1100 rad$^{-1}$ (see inset of Figure 2); this value is independent of the overall dimension of the spiral waveguide. For the particular Archimedean spiral waveguide discussed here ($R_0 \approx 5.6$ mm), this corresponds to a coupling coefficient $\kappa = k/R_0 \approx 20$ mm$^{-1}$ (or a coupling length of 75 μm or 48 wavelengths). This can readily be accomplished with waveguides having a high numerical aperture, for example, a ridge waveguide comprising silicon-on-insulator in air, which allows coupling lengths of the order of one wavelength. An alternative is a ridge waveguide comprising a high-index glass in air, although the coupling lengths of such structures are not typically as short. A waveguide with strong coupling can therefore be used to solve the phase mismatch problem in a spiral waveguide.

Properties of Phase-Matched Coupled Waveguides

Another method of removing the phase mismatch problem can use a rectangular spiral waveguide, or a waveguide having a spiral shape with a significant fraction of straight segments.

Another solution to eliminate the phase mismatch is dispersion management. For example, the spiral waveguide 12 can be designed such that the propagation constants $n_{eff}$ of facing arms 14 of the spiral waveguide 12 differ by just the right amount to compensate for the difference in physical length. This variation in propagation constant can be adiabatic (slow on a scale of a wavelength) to minimize the additional loss associated with propagation along a waveguide with z-dependent properties. The condition for phase compensation, or equivalently for phase matching between facing arms, is:

$$n_{eff,1}(\theta)R_1(\theta)d\theta = n_{eff,2}(\theta+2\pi)R_2(\theta+2\pi)d\theta \qquad (13)$$

where $n_{eff,1}(\theta)$ is the effective index of the mode in the first arm, and $n_{eff,2}(\theta)$ is the effective index of the mode in the second arm. Along both arms, the angular position $\theta$ varies between 0 and $2\pi$. This condition guarantees that along any small angular propagation $d\theta$, the phase accumulated by the wave in arm 1 ($n_{eff,1}(\theta)R_1(\theta)d\theta$) and in arm 2 ($n_{eff,2}(\theta+2\pi)R_2(\theta+2\pi)d\theta$) are identical. In addition, the effective indices can be made continuous at the junction between the two waveguides (i.e., $n_{eff,1}(2\pi) = n_{eff,2}(0)$). These relationships can be extended straightforwardly to an arbitrarily large number of arms.

Equation 13 subject to the continuity relation has many solutions. One of them can be found by imposing the additional condition that $n_{eff,1}(\theta)R_1(\theta)=n_{eff,2}(\theta+2\pi)R_2(\theta+2\pi)$ is a constant, for example equal to the value of $n_{eff,1}(\theta)R_1(\theta)$ at the input to the spiral waveguide (any other location along the spiral waveguide will work too).

Using the simple expression for the dependence of the radius $R_j(\theta)$ for an Archimedean spiral waveguide in Equation 13, it is easy to solve Equation 13 subject to the continuity condition of $n_{eff}(\theta)$ and the condition that $n_{eff,1}(\theta)R_1(\theta) = n_{eff,2}(\theta+2\pi)R_2(\theta+2\pi)$ is a constant to obtain the effective index distribution that guarantees phase matching:

$$n_{eff,1}(\theta) = \frac{R_0 n_0}{R_0 - \dfrac{a}{2\pi}\theta}$$

$$\qquad (14)$$

$$n_{eff,2}(\theta) = \frac{R_0 n_0}{R_0 - \dfrac{a}{2\pi}(\theta+2\pi)}$$

where $n_0 = n_{eff,1}(0)$ is the mode effective index at the input to the spiral waveguide.

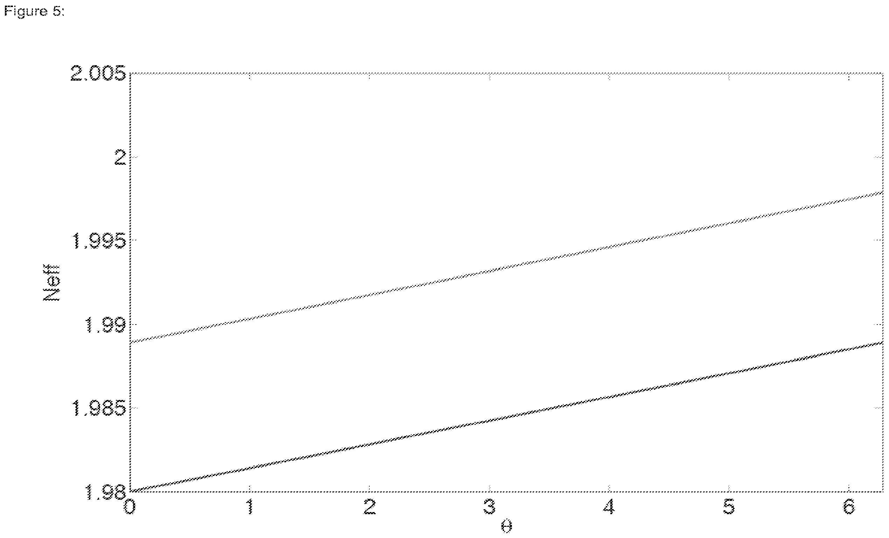

Figure 5 is a plot of the distributions of $n_{eff,1}(\theta)$ and $n_{eff,2}(\theta)$ that provide phase matching in the Archimedean spiral waveguide described above. It shows that the effective index increases linearly with angular position $\theta$, varying by only about 0.0014 per 360-degree turn, or a $\Delta n_{eff}/n_{eff}= 0.0014/1.98 \approx 0.071\%$ per turn, which is very small and easy to achieve in practice. For example, this can be accomplished by slowly increasing, in an essentially linear fashion, the width or height of the spiral waveguide (assuming a waveguide based on total internal reflection and with a rectangular index profile) from input to output. For example, if $n_{eff}$ is adjusted by varying the waveguide width w, basic waveguide theory indicates that $\Delta n_{eff}/n_{eff}\approx 2\Delta w/w$. Hence the desired width perturbation is $\Delta n_{eff}/n_{eff}/2$, or only ~0.035%. For a 4-$\mu$m wide waveguide, this is only 4 nm per turn. Such a small width variation, over an arm length of about 35 mm, is so gradual (adiabatic) that it will cause very little additional loss. For a 100-arm CSW, this width would be only 10% larger at the output port than at the input port. This is small enough that the waveguide can still be single-moded throughout the spiral.

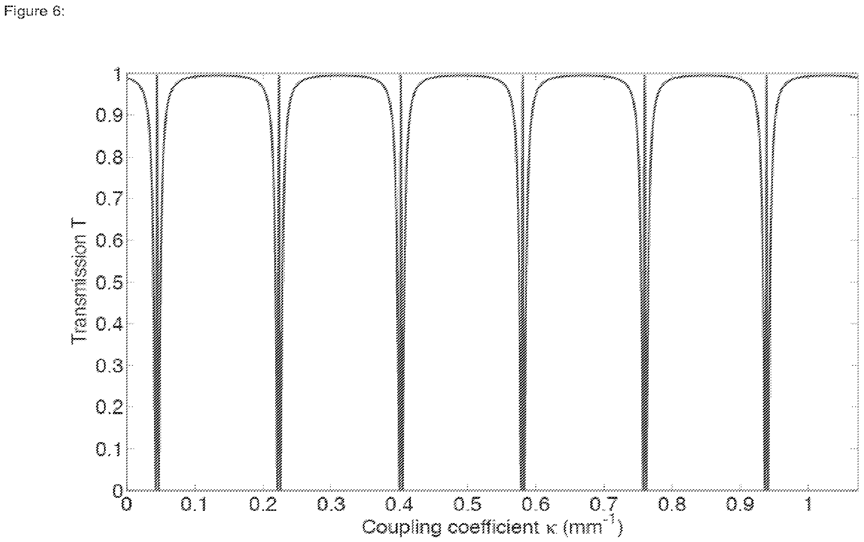

Figure 6 shows the transmission at a resonance wavelength as a function of coupling coefficient $\kappa$ for the same Archimedean spiral waveguide discussed above, except that instead of the effective index being constant as in the previous simulations, now the effective index varies along angular position $\theta$ according to Equation 14. The transmission now exhibits strong resonances (it dips down to zero), even down to lowest resonant values of the coupling coefficient. These are true resonances, as opposed to the pseudo-resonances that occurred in the phase-mismatched Archimedean spiral waveguide of Figure 2 at low coupling coefficients. At each resonant $\kappa$, the transmission is near maximum (near unity). On either side of each resonance the transmission drops sharply to zero. This property is the same as in the previous, non-phase-matched Archimedean CSW of Figure 2 at very large resonant $\kappa$ values, but it now occurs at very low coupling coefficients. The lowest coupling coefficient where it occurs in this particular example is about 0.4 mm$^{-1}$, which is a reasonable coupling coefficient for optical waveguides at usual operating wavelengths (visible to infrared).

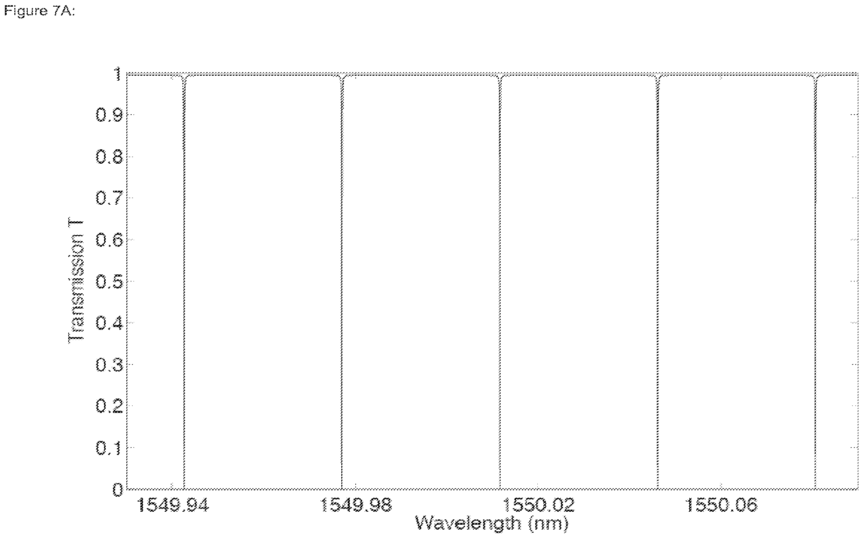

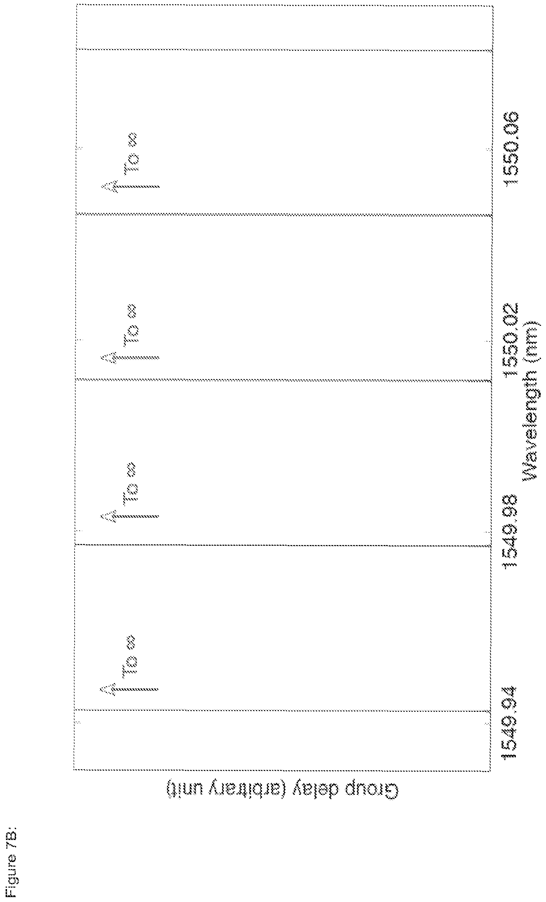

Figures 7A and 7B show the calculated transmission spectrum and group delay spectrum, respectively, for the same phase-matched Archimedean CSW as in Figure 5, plotted at a resonant coupling coefficient (namely, $\kappa= 0.4001$ mm$^{-1}$). As in the case of Figures 3 and 4, the group delay spectrum exhibits very sharp resonances where the group delay goes to infinity. These sharp peaks coincide, in the transmission spectrum, with very sharp resonances where the transmission reaches zero. The main difference with the non-phase-matched Archimedean CSW of Figures 3 and 4 is again that in this phase-matched Archimedean spiral waveguide, these resonances exist at a low resonant coupling coefficient.

In certain embodiments described above, the waveguide 12 can comprise a taper. Other approaches can involve varying the height of the waveguide 12 instead of its width, or varying the index of refraction of the core and/or cladding material of the waveguide 12 in order to achieve the desired variation in $n_{eff}$ along the waveguide length.

In any of these approaches, the variation in $n_{eff}$ is associated with a variation in coupling coefficient k along the length of the spiral waveguide 12 as well. This variation in k will result in a change in the resonance condition in k, and in general in a deterioration of the efficacy of the CSW to produce slow (or fast) light. The impact of this effect can be mitigated or eliminated by selecting an approach for phase matching the CSW that results in a minimum alteration of the coupling coefficient. For example, the phase matching can be implemented by depositing a layer of suitable refractive index over the top of the spiral waveguide 12, with a thickness that increases or decreases from the input to the output of the spiral waveguide 12, so as to modify the effective index of the mode and meet the condition of Equation 14 (and its attendant continuity condition). This design changes the effective index of the mode, but it has relatively little impact on the coupling coefficient. This layer can be designed via standard simulations of the coupling coefficient of coupled optical waveguides, using for example one of numerous computer simulators available on the market. Other solutions exist, such as selecting the spiral waveguide's index profile and distribution of index profile along its length such that the effects on the slow-light resonances of the residual phase mismatch and the residual coupling coefficient dependence on z (or equivalently $\theta$) partially or fully cancel each other, leading to maximally strong slow-light resonances.

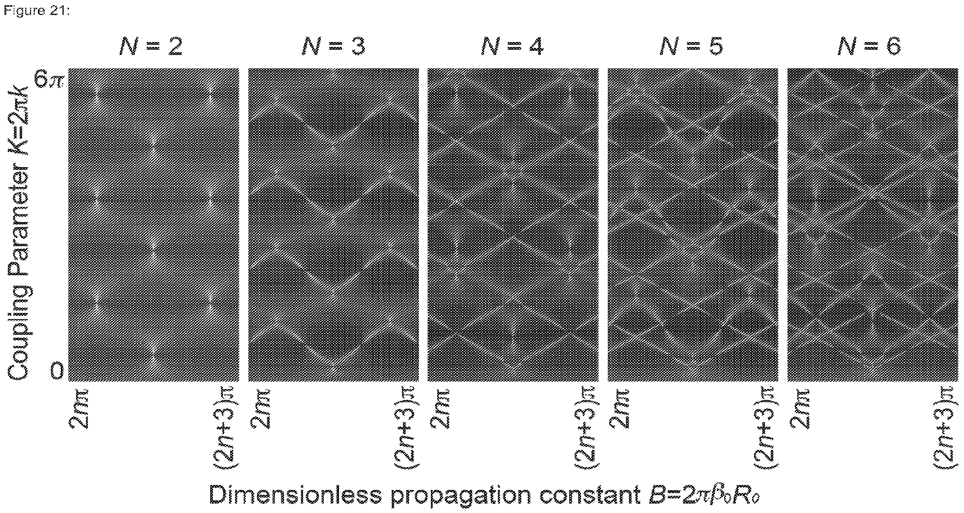

In the phase-matched spiral waveguide 12 with $N$ arms, the transmission and group delay are determined by the optical frequency and the coupling coefficient, which can be converted into a normalized propagation constant $B=2\pi\beta_0 R_0$, and a normalized coupling coefficient $K = 2\pi k$. Figure 21 illustrates the contour plots for the group delay in the $B$-$K$ space from $N = 2$ to $N = 6$. The group delay spectrum is periodic in $B$ with a period of $2\pi$ for all Ns, so each frame only shows a narrow range of $B$ values limited to a little over one period. The white areas indicate large group delays, corresponding to slow light. The dark areas indicate small group delays, corresponding to normal or fast light.

In the white areas, the phase accumulated due to propagation in one turn (B), and the phase accumulated due to coupling (K) add up such that the light interferes with itself constructively. Therefore the light resonates in the spiral waveguide 12 and is slowed down (e.g., by a large factor). However, in the dark areas, the phase condition is not satisfied and light does not add constructively to itself after each turn. The group velocity is either normal (equal to $c/n_{eff}$, where c is the speed of light in vacuum) or higher than normal (larger than $c/n_{eff}$, or fast light). For all $Ns$, the spectra are periodic in $B$ with a period of $2\pi$. For a constant frequency, the group delay is also periodic in $K$, with a period of $2\pi$, but only when $N$ is equal to 2 or 3.

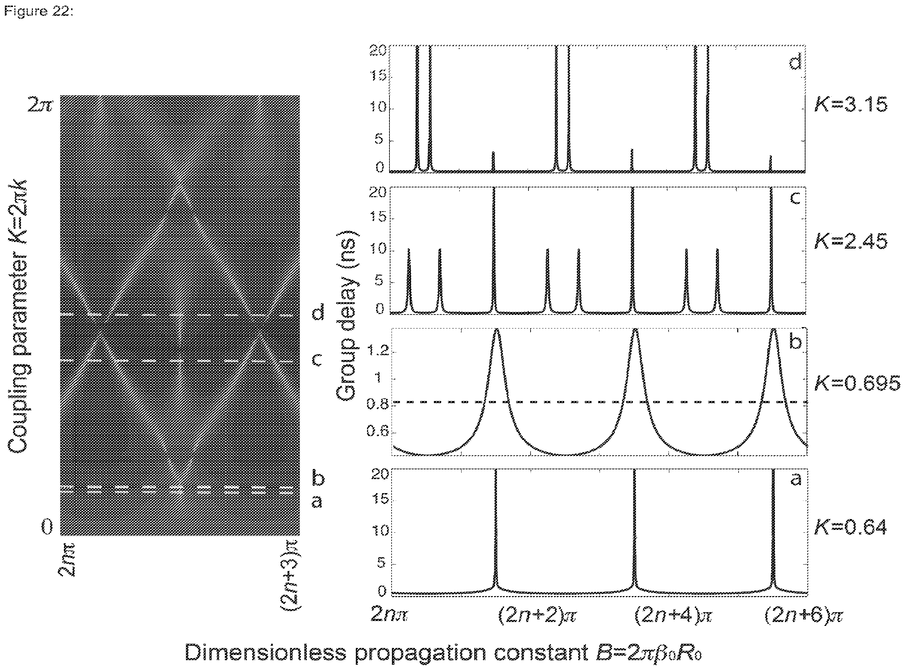

As the number of arms N increases, the density of resonant pairs (*K*, *B*) and the complexity of the group delay spectra increase, Figure 22 shows the dependence of the group delay spectrum on coupling for a spiral waveguide 12 with 4 arms. The representative spectra (a)-(d) plotted in Figure 22 show the group delay over three periods of *B* for various values of *K*. The shape of the spectra depends on the value of K, therefore this device provides a wide choice of resonance spectra that can be adjusted by selecting the appropriate coupling coefficient. In all spectra, there are at most two strong resonances in each period in *B*; 2 is the maximum degeneracy in *B*. When *K* is selected to be a resonant value (e.g., *K* = 0.695 in Figure 22(b)), the light couples across certain arms instead of propagating through them. The group delay, shown as solid lines in spectra (a)-(d), is then smaller than the normal group delay, shown as a dashed line in spectrum (b), such that the device supports fast light. For each resonant value $K_r$, there are two values of *K*, slightly detuned from $K_r$ and on both sides of $K_r$, where the group delay goes to infinity. However, the transmission is zero at these values, and no photons are detected, which is analogous to the case in a ring resonator operated at critical coupling.

In a ring resonator, the group delay changes sign when the coupling coefficient goes across the critical coupling. Similarly, in a spiral waveguide 12 between the values *K* that produce infinite group delay and $K_r$, there exists a small region where the group delay is negative. For appropriate coupling coefficient and frequency, the negative group delay can have the same maximum amplitude as positive group delay.

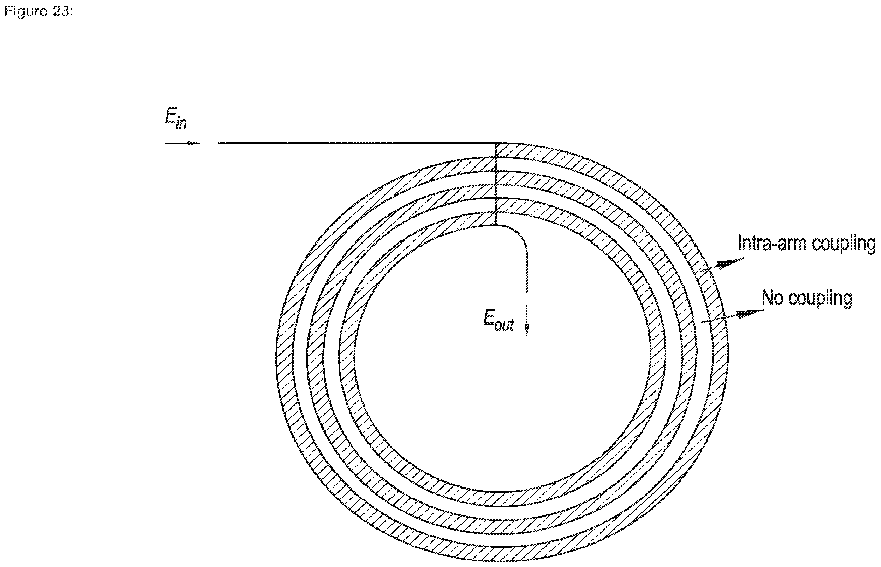

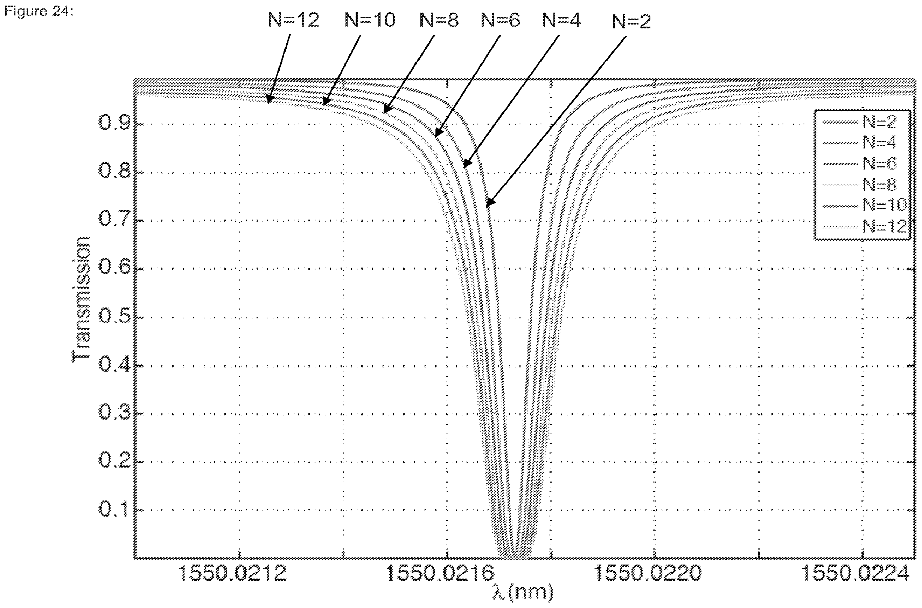

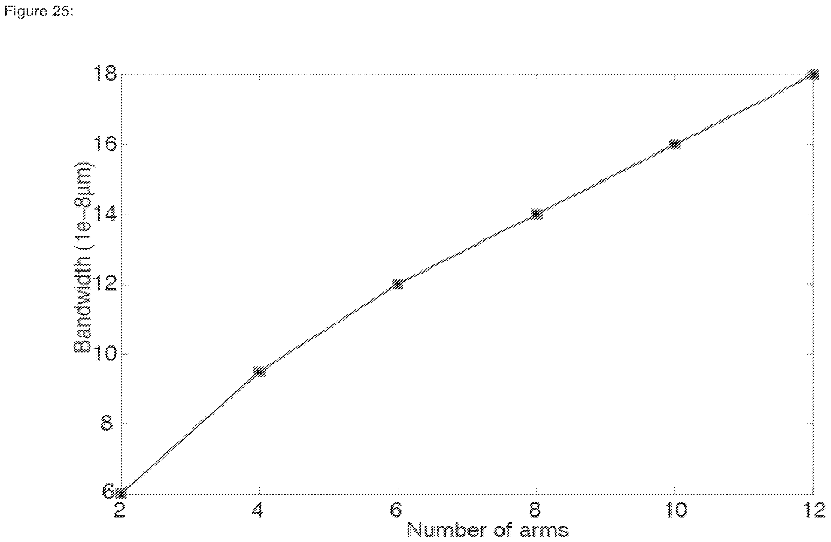

In a spiral waveguide with *N* arms, specific sequences of coupling coefficients can be selected to tailor the spectral properties of the interferometer. As one of many possible examples, consider a phase-matched Archimedean spiral waveguide with an even number of arms *N* = 2n and coupling coefficients ($k_1$, $k_2$, $k_3$, $k_4$, ..., $k_{2n}$) that follow the sequence (k, 0, *k*, 0, ..., 0), as illustrated in Figure 23. The grey area in the figure indicates where the coupling exists, while the white area indicates regions where there is no coupling between the arms. This is physically similar to dividing the spiral waveguide 12 into several cascaded two-arm spirals. When *k* is selected to be resonant, each pair of coupled arms behaves like a ring resonator, and the spiral waveguide as a whole therefore behaves like *n* identical rings coupled to a common linear waveguide, which is a SCISSOR. Its group-delay spectrum is the product of the group-delay spectrum of each individual pair of coupled arms, and as a result it is wider than these individual spectra: as in a SCISSOR, proper sequencing of the coupling coefficients leads to broadband slow light. The broadening in the transmission spectrum as the number of arms in increased is illustrated in Figure 24. Simulations show that the 3-dB bandwidth of the transmission resonances then grows roughly as $N^{1/2}$, as shown in Figure 25.

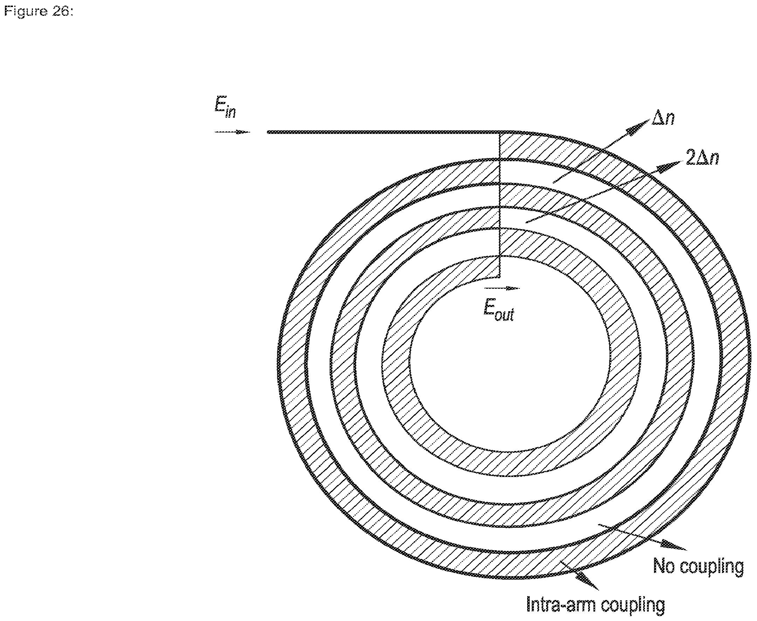

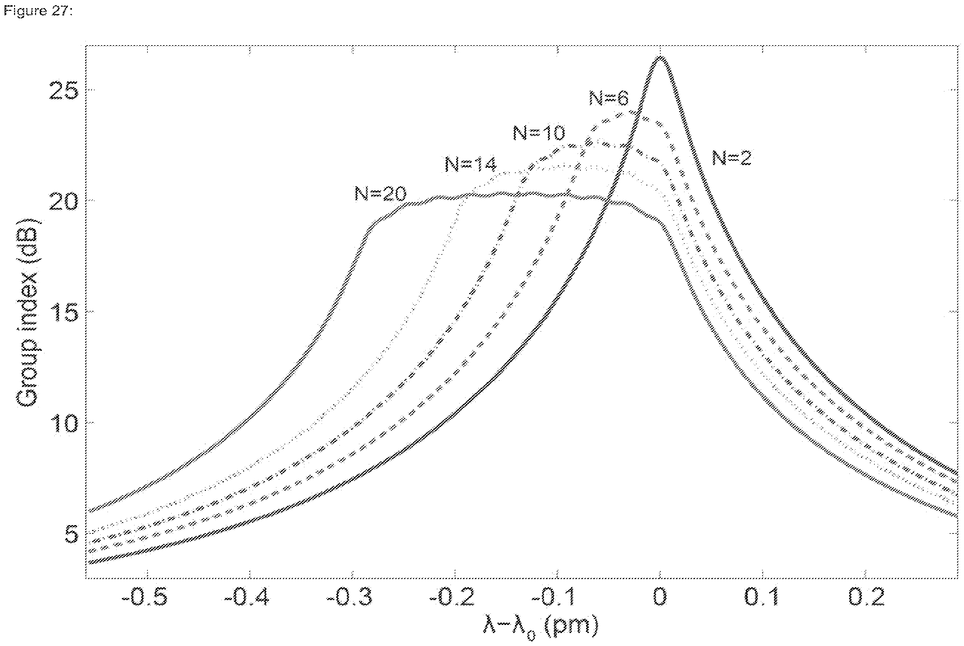

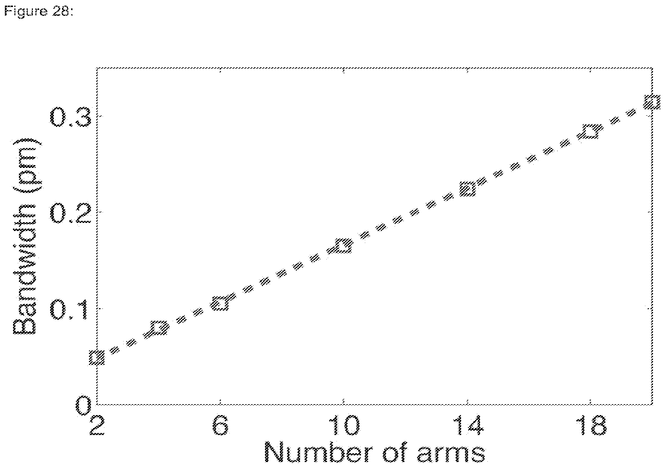

Even broader slow light can be achieved by slightly shifting the resonance frequencies of individual pairs of arms with respect to each other, which can be done for example by increasing the effective index of the waveguide slightly from pair 1 to pair 2 to pair *n*, as shown in Figure 26. The group index spectrum of this spiral waveguide 12 is illustrated in Figure 27 for *N* = 2, 6, 10, 14, and 20. The resonance wavelength for *N* = 2, $\lambda_0$ = 1.549983 $\mu$m, is used as the reference. The change in effective index between consecutive pairs $\Delta n_{eff}/n_{eff}$ was chosen to be $10^{-8}$, small enough to ensure that the shifted resonant peaks overlap with each other to create broad group delay spectra. The coupling coefficient *k* = 1.46 was chosen so that the resonant peaks have approximately the same amplitude and the ripples between resonant peaks are small. As the number of arms is increased, the group-delay spectrum broadens markedly (see Figure 27), roughly linearly with *N* (see Figure 28). By changing the coupling coefficient *k* from 1.46 to 1.499, one can create a completely different group-delay spectrum with strong, highly localized resonances (see Figure 29), which can be of great interest to enhance optical nonlinear conversion, for example.

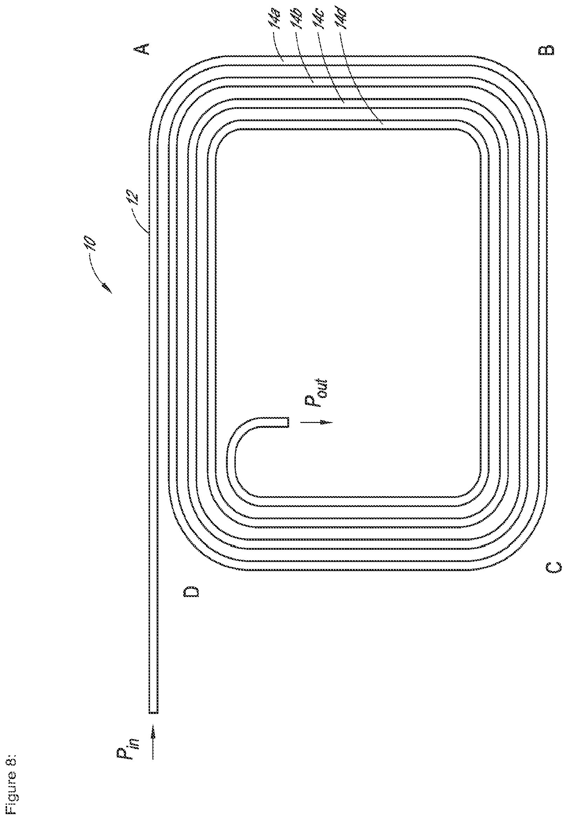

Another solution to the problem of phase mismatch between coupled arms 14 is to use a spiral shape with a significant fraction of straight segments. One example among several is a waveguide 12 having a rectangular profile with rounded corners, as schematically depicted in Figure 8. In certain such embodiments, most of the coupling now occurs between straight portions of the waveguide 12, along which the phase accumulates at the same rate. A phase mismatch still exists between adjacent arms 14 in the corner regions. But its impact can be eliminated or reduced in certain embodiments. For example, this can be done by selecting the lengths of the corners such that the phase mismatch is a multiple of $2\pi$, the waves are then in phase at the inputs to all straight sections. Coupling at the corners will still reduce the peak resonances, but only to a degree that depends on the relative total length of the corners compared to the total length of the spiral waveguide 12, which can be kept small in practice. If need be, in certain embodiments, this residual effect can be eliminated or reduced (e.g., by removing or reducing coupling in the corners, for example by spacing the spiral arms 14 around all corners with a low-index material that is different from the material between the straight arm portions, which can be done by forming trenches between the arms along the corner regions so that the arms are spaced by air).

The properties of a rectangular spiral waveguide 12 are discussed below for an example square spiral waveguide 12 with straight sides of length *L* = 6 mm and an arm spacing *a* = 3.9869 $\mu$m, with the same effective index and loss coefficient as the Archimedean spiral waveguide discussed above. The corners in the regions labeled A, B, and C in Figure 8 are generally circular with a radius $R_j$ that decreases from the outer arm to the inner arm according to $R_j = R_1 - (j-1)a$, where $R_1$ = 2 mm is the radius on the outermost arm and *j* is the number of the arm. Because all straight sides adjacent and substantially parallel to one another have the substantially same length, the corners in the region labeled D cannot be circular. The corners in this region are taken to have a curvature that varies linearly between $R_j$ and $R_{j+1}$, i.e., by $R_{j+1}'(\varphi) = R_j - 2a\varphi / \pi$, with $0 \leq \varphi < \pi/2$. This sequence and these values were selected so that the corner phase mismatch is $16\pi$ at the operating wavelength $\lambda_0$ = 1550.00 nm. The total length $L_t$ of this spiral waveguide for $N$ = 2 is ~ 69.969 mm. For the purposes of this discussion, it is assumed that there is no coupling along the corners. Other dependencies for the radius of curvature $R_{n+1}'(\varphi)$ dependence on angular position $\varphi$ besides a linear dependence are possible. The only condition is that $R_{n+1}'(\varphi)$ varies between $R_n$ and $R_{n+1}$.

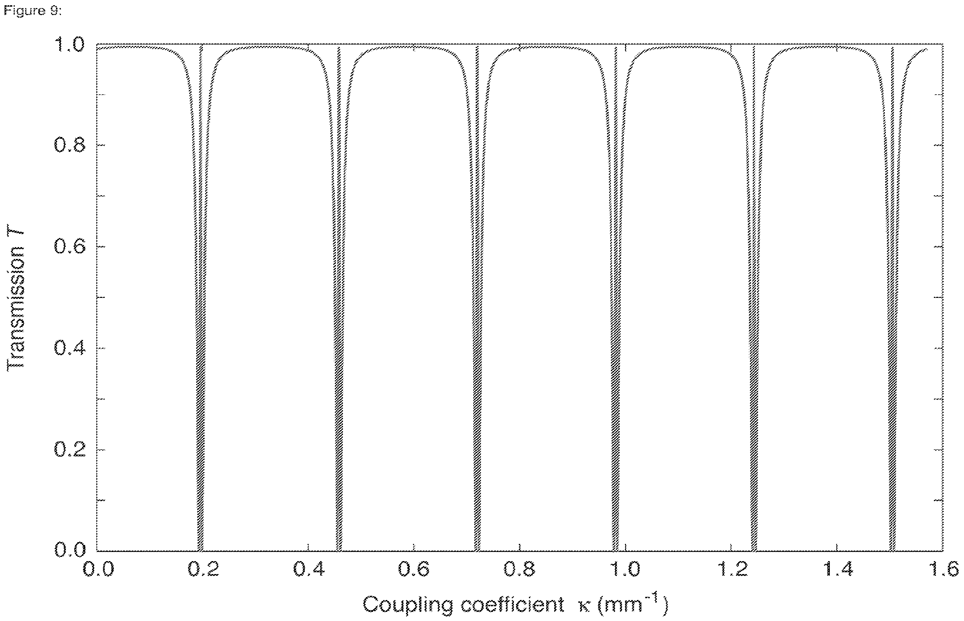

As expected from the foregoing discussion, the elimination of all coupling between curved waveguides in this structure greatly strengthens the resonances. This behavior can readily be seen in Figure 9, which plots the transmission of this spiral waveguide 12 at a resonant wavelength for $N$ = 2 as a function of $\kappa$. The transmission resonances are now periodic in $k$. Simulations show that the properties of this CSW are qualitatively the same as that of the Archimedean spiral waveguide, except that strong resonances exist even for weak coupling coefficients. Figure 9 indicates in particular that a first resonance in coupling occurs for a coupling coefficient as low as 0.2 mm$^{-1}$, which is entirely realistic.

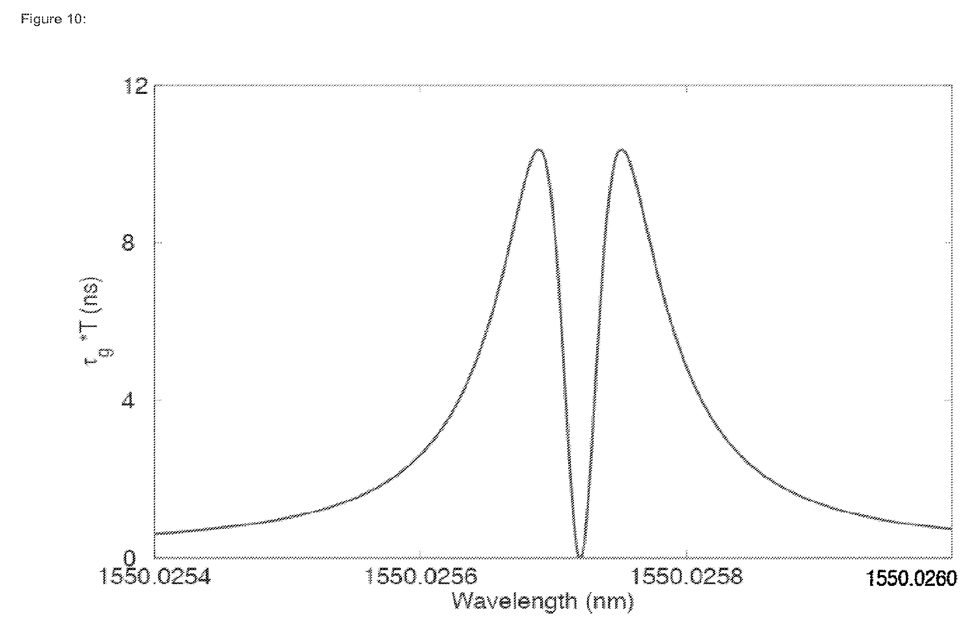

Figure 10 plots the figure of merit (e.g., the product of the group delay and the transmission) spectrum for this square CSW evaluated at a resonant coupling coefficient ($\kappa$= 0.0622 mm$^{-1}$). The figure of merit is again zero at the resonance wavelength, and has a maximum on each side of the resonance. The maxima are equal to 10.4 ns, which is the same as for the Archimedean spiral waveguide. This is not surprising, since both CSWs have the same total loss and length. Again, the main difference is that the square CSW achieves this result with a practical coupling coefficient.

The corner phase mismatch depends on wavelength, and therefore it is equal to $16\pi$ only at the chosen operating wavelength $\lambda_0$ (and a few other wavelengths on either side of it). In particular, it is not exactly $16\pi$ at most of the CSW's other resonance wavelengths. As a result, at other resonant wavelengths, there is a residual phase mismatch at the corners, which reduces the spiral waveguide's effectiveness at slow-down light. As the wavelength is detuned far beyond the range of Figure 10, the corner phase mismatch gets close (or equal) to the next multiple of $2\pi$, and the group delay takes again a value close (or equal) to the maximum value shown in Figure 10. Unlike other CROWs, this square CSW design in certain embodiments does not provide a periodic series of resonant group delays of equal magnitude. Although this feature is detrimental for some applications, it is certainly inconsequential for others, such as sensing, where a single wavelength of operation is typically sufficient.

In the simulated structure, the corner differential phase shift was set to be exactly $16\pi$ at $\lambda_0$ = 1550.000 nm. To achieve this phase-matching condition at this specific wavelength, which is $2\pi n_{eff}(\pi a/2)/\lambda_0 = 16\pi$, the value of the arm spacing $a$ was adjusted around the target value of -4 $\mu$m to 3.9869 $\mu$m. For this wavelength to also fall on a resonance wavelength of the structure, and hence for the group delay to be infinite at this wavelength, the length of the straight segments of arms was slightly adjusted around the target value of ~ 6 mm (5999.86 $\mu$m). At this point in the design, all the dimensions of the structure are set. There are other wavelengths at which the corner phase shift is exactly a multiple of $2\pi$. The nearest such wavelengths are $\lambda_1$ = 1377.778 nm (a phase shift of $18\pi$) and $\lambda_2$ = 1771.429 nm ($14\pi$). In general, however, these two wavelengths (and the other such wavelengths) will fall close to but not exactly on a resonance wavelength. As a result, at these wavelengths, the group delay is very large but generally not infinite. At all other resonant wavelengths the corner phase shift is not a multiple of $2\pi$ and the group delay on resonance has a finite value.

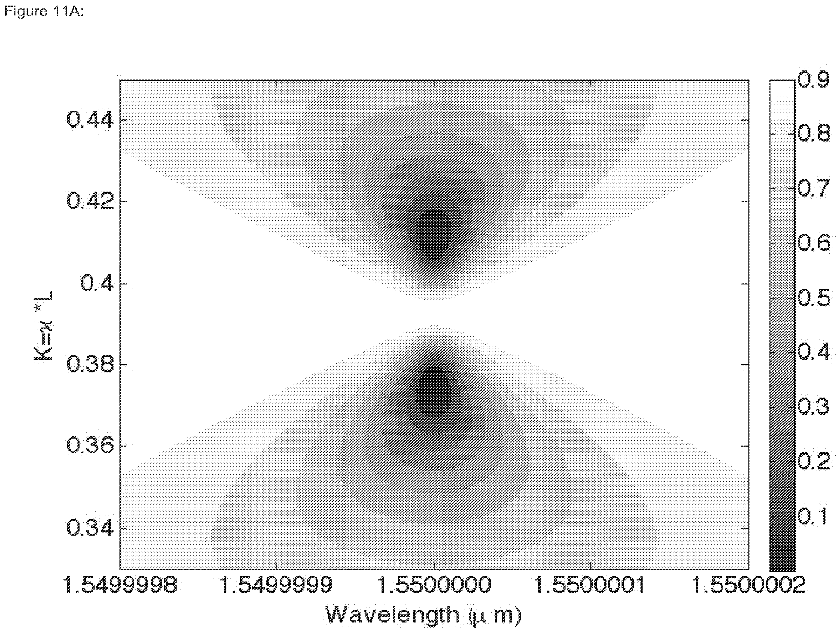

An example technique for maximizing the effective group delay in a coupled waveguide in accordance with certain embodiments described herein is now described. The transmission of the square CSW discussed above is plotted in Figure 11A as a function of two parameters: wavelength $\lambda$ and normalized coupling coefficient K = $\kappa L$, where L is the length of the straight sides of the arms (5999.86 $\mu$m). The two darker regions represent the areas where the transmission is resonant and closer to zero. In both, the resonant wavelength is 1550.00 nm (by design of the structure); the two resonant normalized coupling coefficients are around 0.374 and 0.411. At this resonant coupling the transmission is zero.

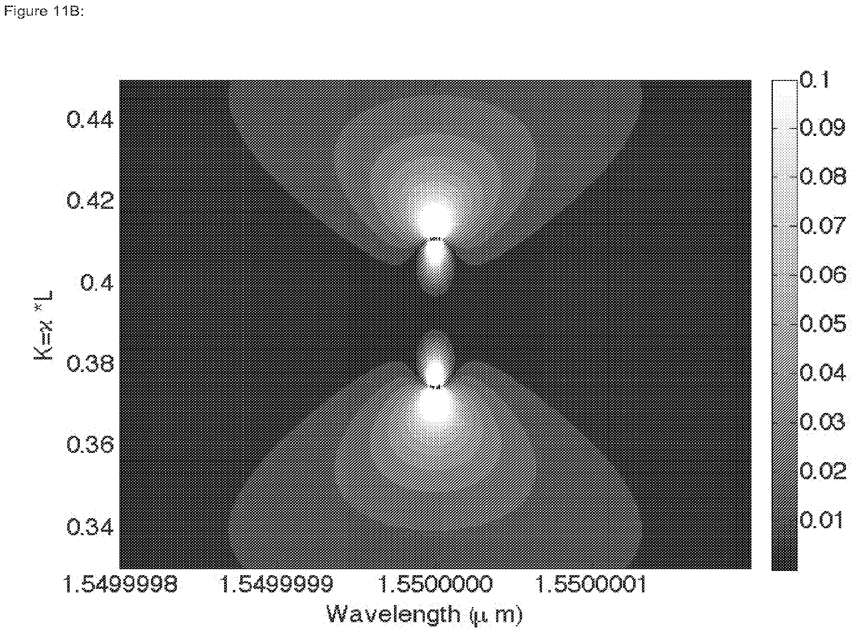

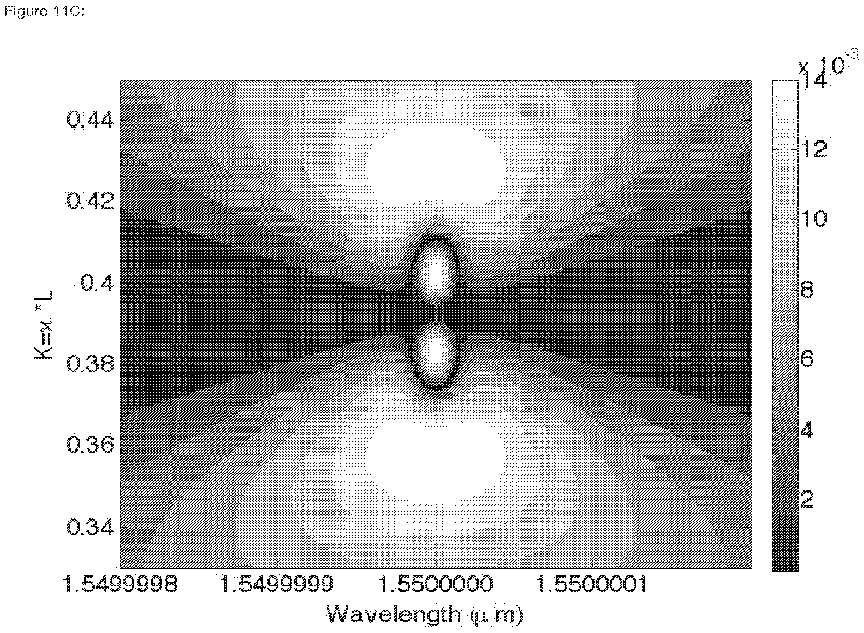

Figure 11B shows the corresponding contour plot for the group delay of the square CSW of Figure 11A and for the same range of parameters. At the resonant coordinates identified in this figure, namely $\lambda$ = 1550.00 nm and $\kappa S$ = 0.374, the group delay goes to infinity. Figure 11C shows the effective group delay as a function of wavelength and normalized coupling coefficient $K$ of the square CSW of Figure 11A. The effective group delay goes to zero at the resonant coupling coefficient and at the resonance wavelength of 1550.00 nm. There are four bright spots in Figure 11C, indicating the regions where the effective group delay is maximum. These four regions occur at the same wavelength (the resonance wavelength at 1550.00 nm) but at different coupling coefficients than the two coupling coefficients that produce maximum group delay. Thus, to operate the square CSW with the highest possible effective group delay, the coupling coefficient can be detuned from the coupling coefficient that gives the largest group delay.

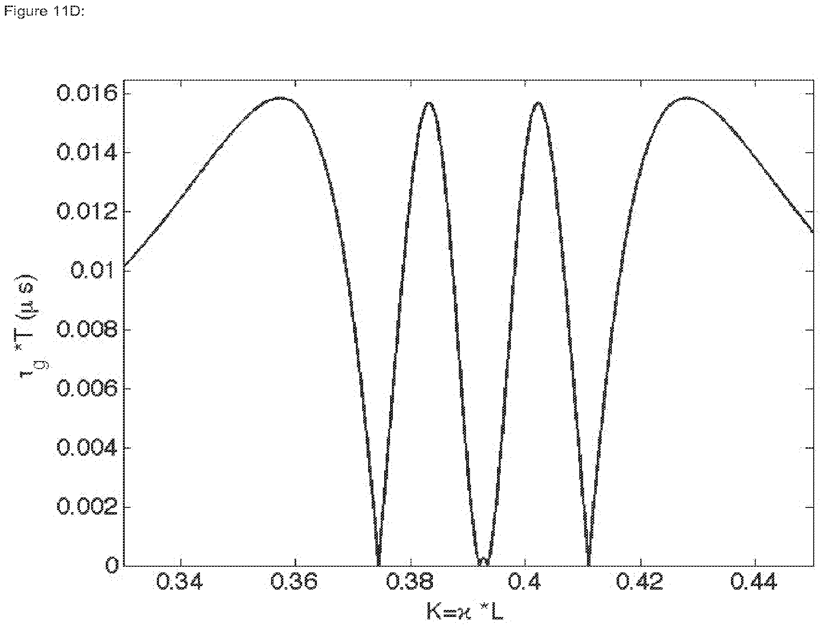

Figure 11D shows a cut along the resonant wavelength in Figure 11C. The normalized coupling coefficient that gives the highest effective group delay is around 0.358, which is approximately 4.3% lower than 0.374, the optimum normalized coupling for highest group delay. Figures such as Figures 11A-11D can be generated numerically using the equations provided herein to determine the coupling coefficients that will produce either the largest group delay or the largest effective group delay, depending on the application envisioned by the user.

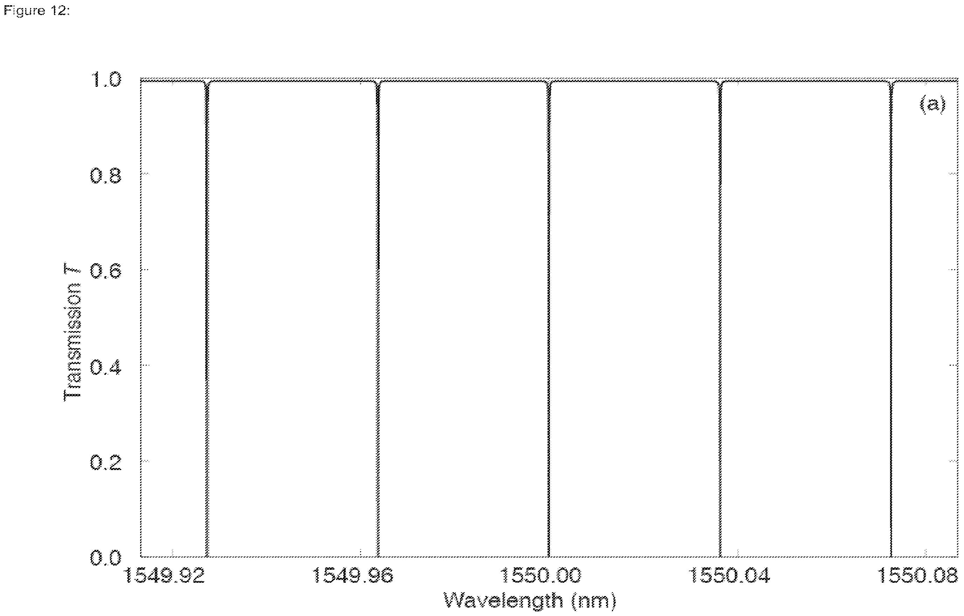

Figures 9 and 10 were plotted without applying this example technique, while Figures 11 and 12 are plotted while applying this example technique. Specifically, for Figures 9 and 10, a was selected to be 3.9869 $\mu$m to make sure

that the first condition was satisfied at $\lambda_0$ = 1550.000 nm, but the second condition (adjusting $L_t$ so that this wavelength also falls on a resonance wavelength of the structure), was not applied. As a result, $\lambda_0$ was not exactly on a resonance, but was a bit higher than 1550.000 nm. As a first consequence, at the resonance nearest $\lambda_0$ (which can be referred to as $\lambda_0'$), the group delay is almost certainly not exactly infinity. As a second consequence, the value of the total length discussed above (~ 6 mm) is not the optimum value. The optimum value is, as explained below, 5.99986 mm. The difference is small, but can make a large difference.

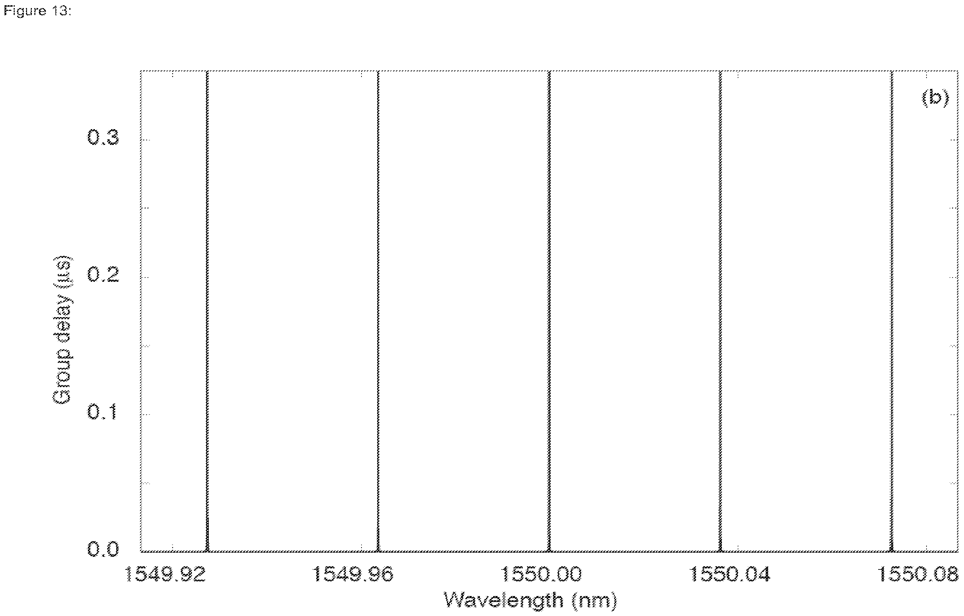

Using the example technique of Figures 11A-11D, Figure 12 shows the transmission spectrum, and Figure 13 shows the group delay spectrum, of this square SCW calculated for the lowest resonant coupling coefficient. Both spectra are made of a series of sharp resonances that occur at the same periodic resonance wavelengths. At the wavelength for which the corner differential phase shift is exactly $16\pi$ ($\lambda_0$ = 1550.00 nm by design), the transmission dips to zero. At this same wavelength, the group delay goes to infinity, even in the presence of loss, as it does in a COR. At all other resonant frequencies (other than the few resonant frequencies where the corner phase shift is another multiple of $2\pi$), the corner phase shift is not a multiple of $2\pi$ and the group delay has a finite value (albeit possibly very high) and the transmission does not quite reach zero. In contrast, in a COR all resonant wavelengths have the same behavior, because all arms have equal length and the structure is therefore phase matched at all wavelengths.

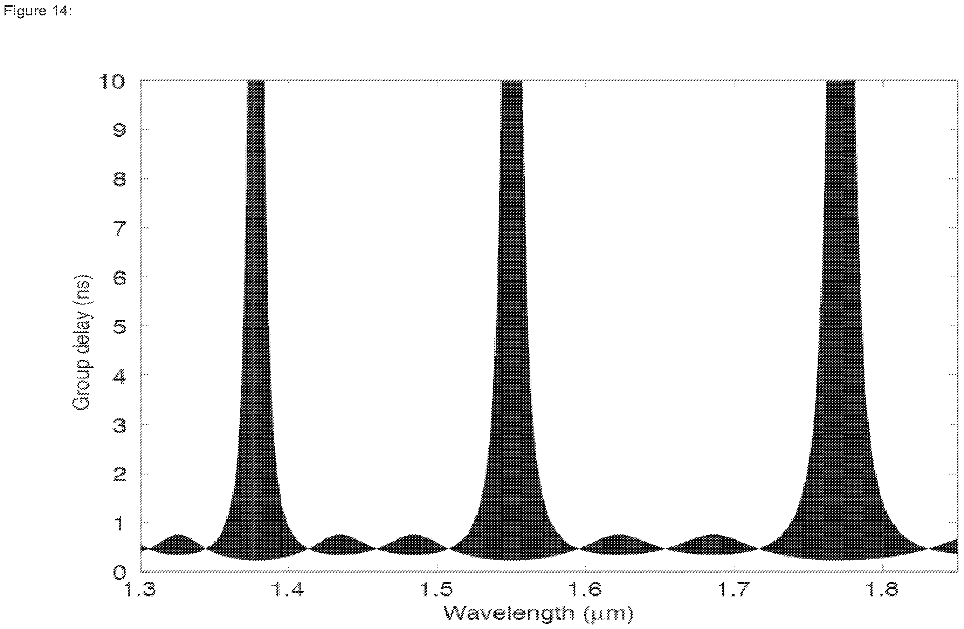

This dependence is illustrated in Figure 14, where the group delay spectrum is plotted over a larger range of wavelengths. As expected from the discussion herein, it exhibits three spikes around the three special wavelengths mentioned above, where the group delay is infinite (at $\lambda_0$) and nearly infinity (at $\lambda_1$ and $\lambda_2$). It is interesting to note that this spectrum points out not only to wavelengths where light has a large group delay, but also to wavelengths where the group delay is very low (the lowest points in Figure 14). The group delay is lowest at wavelengths in the vicinity of $\lambda_i$, and equal to 0.23 ps. This is about half the delay through this same spiral in the absence of coupling $\tau_0$ = 460 ps. The physical reason for the existence of fast light can readily be understood in a spiral with two arms (Figure 1). When the coupling coefficient is selected such that light traveling inside the spiral waveguide is fully coupled from the outer arm to the inner arm in one turn, then it exits the spiral after one turn. By the time it exits it has traveled essentially half the total length $L_t$ of the spiral waveguide, hence its group delay is $-n_{eff}(L_t/2)/c = \tau_0/2$, or 0.23 ns.

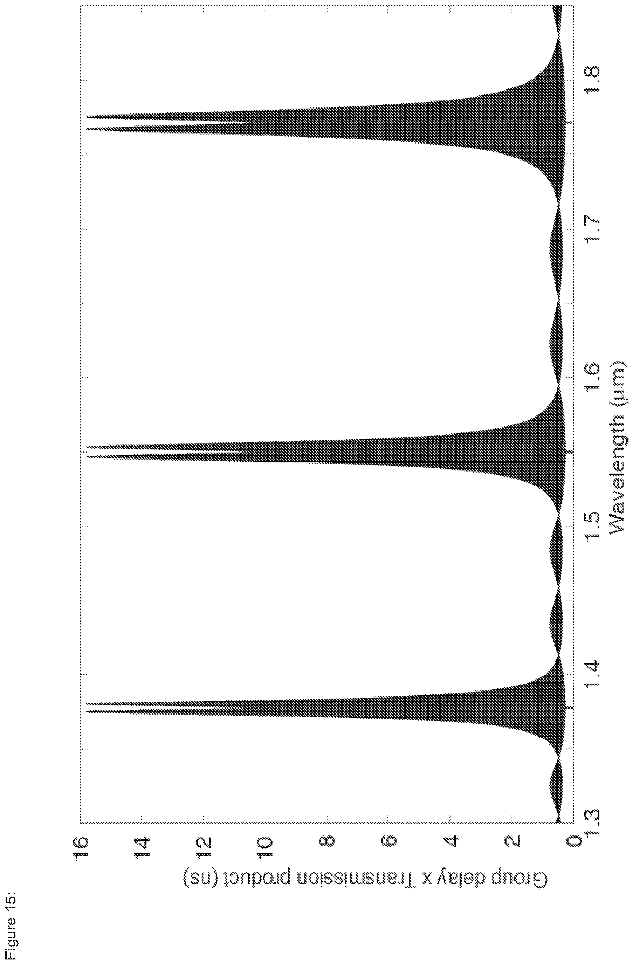

Since the group delay only tells part of the story, Figure 15 shows the effective group delay spectrum for this same spiral waveguide, calculated over the same broad range of wavelengths. This spectrum is a series of twin peaks of equal amplitude, like the twin peaks of Figure 10. Because these twin peaks are unresolved on this broad wavelength scale, what is seen on Figure 15 is the locus of the peaks' maxima. This figure demonstrates that the effective group delay is not maximum near one of the resonances $\lambda_i$, but at two wavelengths slightly detuned and on either side of these resonances. Note that at $\lambda_0$ the figure of merit goes to zero. It also goes very close to zero (and possibly zero) at the other privileged wavelengths $\lambda_i$. The reason for the absolute maxima in effective group delay to occur away from these resonances is that at and near these privileged resonance wavelengths the transmission is extremely weak, hence the product of group delay and transmission is not optimum. The maximum effective group delay for this structure is therefore not 10.4 ns (the value near a resonance $\lambda_i$, as shown in Figure 10), but 15.9 ns (see Figure 15). This is nominally the same value as for a ring resonator with the same radius of 5 mm and the same loss coefficient, namely 15.9 nm. This maximum effective group delay corresponds to a normalized slow-down factor $\tau_g T/\tau_0$ = 15.9/0.46 = 34.6. For comparison, the highest measured $\tau_g T$ product reported for a slow-light resonance in a strong silica FBG is ~3.5 ns, for a $\tau_0$ of 960 ps (see, H. Wen, G. Skolianos, M.J.F. Digonnet, and S. Fan, "Slow Light in Fiber Bragg Gratings," Photonics West, San Francisco, California, Proc. of SPIE Vol. 7949, 79490-E1-E11 (January 2011)). This corresponds to a slow-down factor of ~36, a little higher than for this square CSW because the FBG had a lower total loss (a loss coefficient of 0.1 m$^{-1}$ for a length of 2 cm). Similarly, simulations show that a COR with the same total length and loss coefficient as this square CSW has a similar effective group delay spectral shape (when also calculated at a resonant coupling coefficient), with a maximum value of 15.9 ns. These quantitative comparisons suggest, as expected from basic principles discussed herein, that the performance of a CSW is comparable to that of other optical resonators.

A number of schemes can be implemented to reduce or eliminate the wavelength dependence of the corner phase matching in accordance with certain embodiments described herein. One attractive solution is again dispersion management. For example, in the corners, the waveguide can be designed such that the propagation constants differ by just the right amount to compensate for the difference in physical length. This variation in propagation constant can be adiabatic to minimize associated propagation loss at the transitions between corners and straight sides. The condition for compensation is $\Delta\beta/\beta = -\Delta L_r/L_r$, where $L_r \approx \pi R_1/2$ is the length of a corner. Since the lengths of facing corners differ by $\pi a/2$, $\Delta L_r/L_r \approx a/R_1$. If $\beta$ is adjusted by varying the waveguide width $w$, and assuming a rectangular waveguide based on total internal reflection, $\Delta\beta/\beta \approx 2\Delta w/w$. Hence the condition to satisfy is $2\Delta w/w \approx a/R_1$. This perturbation is very small. For example, for the square CSW discussed above ($a \approx 4$ $\mu$m, $R_1 \approx 2$ mm), $\Delta w/w \approx 10^{-3}$: the waveguide width in the corners can be increased by only 0.1% per turn. For a 100-arm CSW, this width would be only 10% larger at the innermost corners than at the outermost corners. This is small enough that the corners can still be single-moded throughout the spiral waveguide.

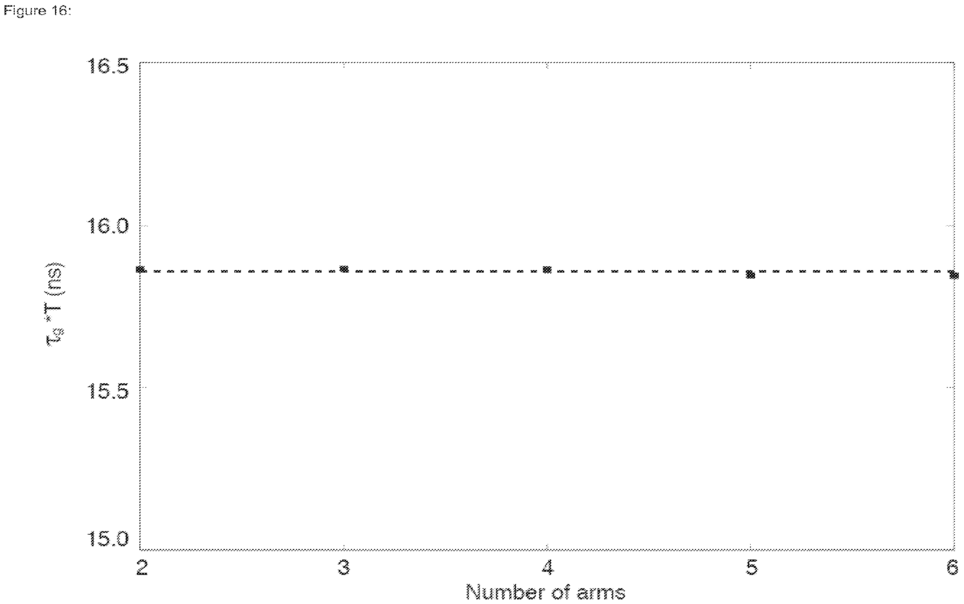

Resonances also exist in square CSWs with higher number of arms. To demonstrate this property, Figure 16 shows the dependence of the maximum effective group delay on the number of arms $N$ in accordance with certain embodiments described herein. For each $N$ both the wavelength and the coupling coefficient were optimized to maximize this figure of merit. The maximum effective group delay is found to be independent of $N$, and equal to 15.9 ns in this particular numerical example. The reason for this result can be understood as follows. In a CSW, photons recirculate a number of times before exiting, as they do in a ring resonator for example. The number of recirculations is related to the finesse (or $Q$ factor) of the interferometer, and it can be quantified by the effective length $L_e$ traveled by the photons in the resonator. The group delay is related to this effective length by $\tau_g = n_{eff}L_e/c$. The total loss experienced by the photons is $\alpha L_e$, and the transmission is expected to be approximately $T \approx \exp(-\alpha L_e)$. The effective group delay $\tau_g T$ should therefore be approximately equal to $(n_{eff}L_e/c)\exp(-\alpha L_e)$. The maximum of this function occurs when $L_e = 1/\alpha$ and is equal to $(\tau_g T)_{max}$ = $n_{eff}/(ec\alpha)$. It is independent of $N$, as predicted in Figure 16. For the parameter values of the square CSW modeled above, it is equal to 15.2 ns, which is close to the exact simulated maximum of 15.9 ns. The physical reason why this maximum is independent of $N$ is that as $N$ increases (while keeping the loss coefficient the same and optimizing the coupling coefficient for each $N$), the group delay increases linearly with $N$, but the transmission decreases (linearly for a small total loss), and these two opposing effects exactly cancel out. Simulations confirm that $(\tau_g T)_{max}$ is also independent of $N$ for a COR with the same parameter values as this square CSW, and that the maximum value of $(\tau_g T)_{max}$ is also 15.9 ns. The figure of merit also has the same maximum value for a linear CROW with two arms (and the same perimeter per ring and the same loss coefficient).

Nested optical waveguides

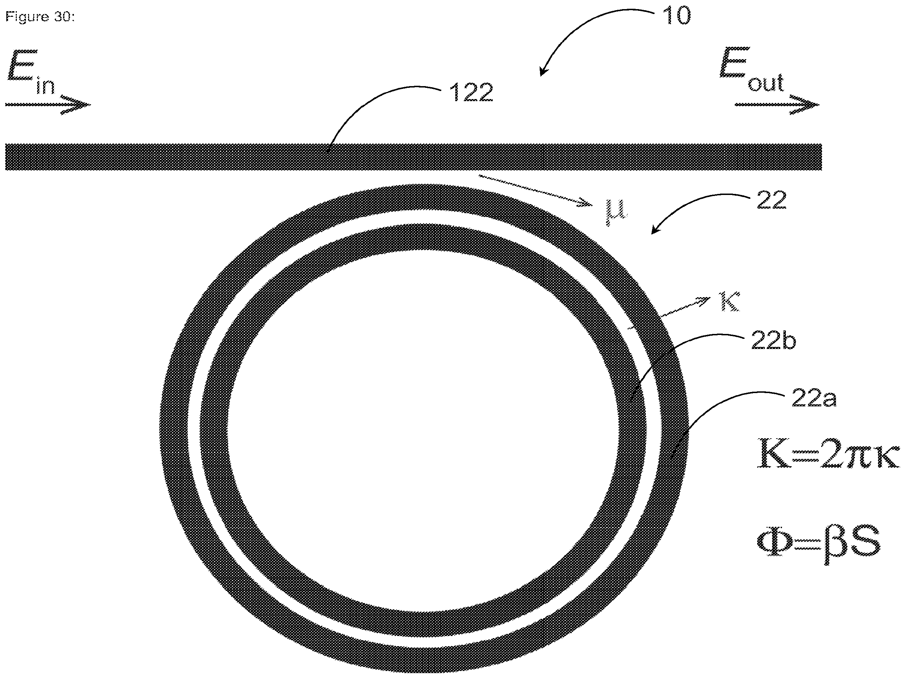

In certain examples, the at least one optical waveguide comprises a plurality of nested optical waveguides 22, as schematically illustrated by Figure 30. The nested optical waveguides 22 can be substantially planar with one another and can exhibit similar resonance properties as the spiral optical waveguide 12 described above. The plurality of nested optical waveguides 22 can comprise a plurality of optical waveguides 22a, 22b, ... (e.g., ring resonators, or other non-circular shapes, such as a rectangular shape with curved corners) that have different perimeters from one another and that are nested within each other. For example, for substantially circular optical waveguides 22a, 22b, ..., the diameters of the ring resonators 22a, 22b, ... can be different from one another and can be concentric with one another. In certain other examples, the nested optical waveguides 22 can have a non-circular shape (e.g., a generally rectangular, square, triangular, polygonal, or irregular shape). In certain examples, the optical waveguides 22a, 22b, ... are not concentric with one another.

In certain examples, in a manner analogous to that in the spiral optical waveguide 12 described above, light propagating in at least a portion of one waveguide 22a is optically coupled to at least a portion of an adjacent waveguide 22b in a direction generally perpendicular to the portions of the waveguides 22a, 22b such that there is appreciable energy transfer between the adjacent nested waveguides 22a, 22b. For example, the portion of the waveguide 22a and the portion of the waveguide 22b can be sufficiently close to one other to allow energy transfer between the two adjacent waveguides 22a, 22b. Each optical waveguide 22a, 22b, ... of the plurality of nested optical waveguides 22 serves as an elongated portion or arm of the at least one optical waveguide, analogous to the elongated portions or arms described above with regard to the spiral optical waveguide 12. The coupling between rings can be constant or can vary, either from ring to ring (e.g., the coupling between ring 1 and ring 2 can be different from the coupling between ring 2 and ring 3) or along a ring (e.g., the coupling coefficient can vary azimuthally along the ring).

An optical coupler 120 can comprise an input/output waveguide 122 that is optically coupled to at least one waveguide of the plurality of nested optical waveguides 22 (e.g., optically coupled to an outer waveguide 22a) with a coupling coefficient $\mu$, and that is used to inject light into the plurality of nested optical waveguides 22 (e.g., into the outer waveguide 22a) and to collect light out of the plurality of nested optical waveguides 22 (e.g., out of the outer waveguide 22a).

In certain examples, adjacent optical waveguides have different radii of curvature, so the phase accumulated by a field in a given waveguide or arm is different from the phase accumulated in an adjacent waveguide or arm. As a result, the power exchange between adjacent arms cannot be complete, for much the same physical reasons as described above with regard to a uniform spiral optical waveguide 12. Consequently, the resonances may not be very strong, unless again the coupling per unit length is much stronger than the phase mismatch per unit length. As described above for the spiral optical waveguide 12, a waveguide that enables very strong coupling (e.g., a silicon ridge waveguide in air) can provide sufficiently strong coupling to reduce the effects of the phase mismatch. A second solution, also as discussed above with regard to the spiral optical waveguide 12, is to adjust the waveguide propagation constant of each optical waveguide 22a, 22b, ... such that the fields accumulate phase at the same rate in all the optical waveguides. In certain examples, the waveguide propagation constants can be adjusted, for example, by making the optical waveguides 22a, 22b, ... gradually larger in cross-section (e.g., wider or taller) toward the center of the structure, so that the inner waveguides have larger propagation constants than do the outer waveguides. In certain other examples, the waveguide propagation constants can be adjusted by having an index of refraction that gradually increases from the outer waveguides to the inner waveguides, which can be easier to achieve in practice than the gradual tapering of the waveguides of the spiral optical waveguide 12, because the dimensions of each of the nested optical waveguides 22 are constant rather than changing over the angular position of the waveguides 22. Algebraically, if $\beta_j$ *is* the propagation constant of arm *j* and $R_j$ the radius of arm *j,* the relationship for phase matching can be expressed as $\beta_j R_j = \beta_{j-1} R_{j-1}$ for all pairs of waveguides 22, *for j = 1* to N, where *N* is the number of nested waveguides in the structure. This condition also guarantees that all the waveguides 22 have the same optical length $2\pi\beta_j R_j$, and therefore all waveguides 22 have the same resonance frequencies.

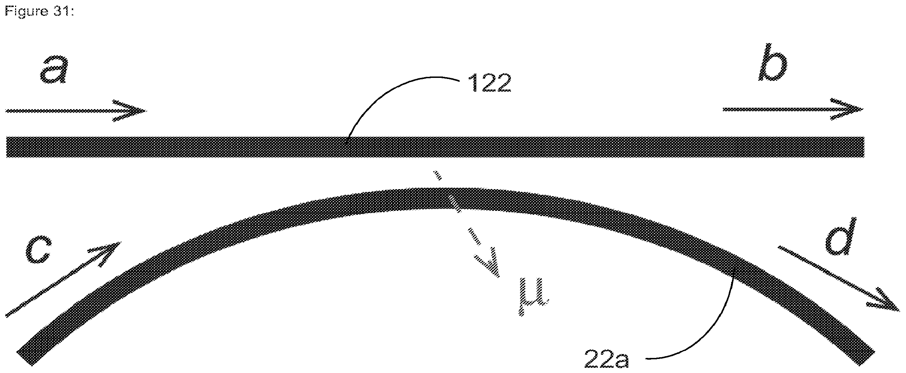

In a mathematical model of the nested waveguide structure, the field amplitudes *a*, *b*, *c*, and *d* at the coupler (e.g., as defined in Figure 31) are related to the coupler field coupling coefficient $\mu$ and the coupler field transmission *t* by:

$$d = i\mu a + tc$$
$$b = i\mu c + ta \quad \text{and} \quad t^2 + \mu^2 = 1 \tag{15}$$

In the waveguides, the coupled equations are similar to those for a spiral waveguide structure.

In each waveguide *j*, the stationary electromagnetic field can be expressed as $E_j(z) = U_j(z)\exp(i\beta z)\exp(i\omega t)$, where $U_j(z)$ is the wave amplitude, $\omega$ is the angular frequency, *t* is time, and *z* is the linear coordinate along the waveguide ($0 < z < S_j$, where $S_j$ is the perimeter of ring *j*). The complex propagation constant $\beta$ is:

$$\beta = \frac{2\pi n_{eff}}{\lambda} + i\frac{\alpha}{2} \tag{16}$$

where $\lambda = 2\pi c/\omega$ is the wavelength, $\alpha$ is the power loss coefficient of the waveguide mode (which can be assumed to be the fundamental, linearly polarized mode), and $n_{eff}$ is its effective index. In cylindrical coordinates $(r, \theta)$, defined in the same manner as in a spiral waveguide, the coupled equations describing the evolution of these *N* fields along each waveguide are:

$$\frac{dU_j(\theta)}{d\theta} = i\beta_j R_j U_j(\theta) + k_{j-1,j}(\theta)U_{j-1}(\theta) + k_{j+1,j}(\theta)U_{j+1}(\theta) \tag{17}$$

In Equation 17, the first term represents propagation (phase and amplitude) of the mode through segment *j* of the waveguide. It is proportional to $R_j$, the radius of the waveguide *j*; this term accounts for the difference in propagation phase in the various waveguides. The second term describes coupling between waveguide *j* and the prior waveguide *j* - 1, characterized by the complex coupling coefficients $k_{j-1,j}$. For the first waveguide ($j = 1$), there is no prior waveguide, hence this term vanishes ($k_{0,1} = 0$). The third term described coupling between waveguide *j* and the next waveguide *j* + 1, characterized by coupling coefficients $k_{j,j+1}$. For the last waveguide ($j = N$), there is no next waveguide, hence this term vanishes ($k_{N+1,N} = 0$). For energy to be conserved, the coupling coefficients for the coupling between curved waveguides, either lossy or lossless, must satisfy $k_{j-1,j} = -k_{j,j-1}^*$. The fields must be continuous at angular position $\theta = 0$ for waveguides 2 and above, while the first waveguide can couple with the coupler:

$$U_j(0) = U_j(2\pi)e^{i\beta S_j} \quad j > 1 \tag{18}$$

$$U_1(0) = i\mu E_{in} + tU_1(2\pi)^* e^{i\beta_1 S_1}$$
$$E_{out} = i\mu U_1(2\pi)^* e^{i\beta_1 S_1} + tE_{in}$$
$$\mu^2 + t^2 = 1 \tag{19}$$

Thus, for a nested-waveguide device (e.g., interferometer) with *N* nested waveguides (e.g., rings), there are *N* coupled differential equations and N+2 boundary conditions. This set of equations can be solved, for example, numerically using the transfer matrix method.

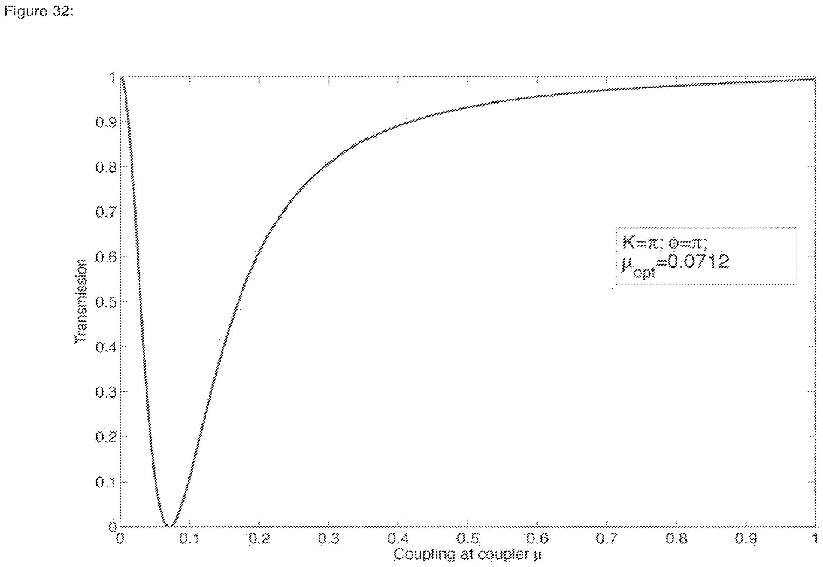

Figure 32 shows the simulated transmission at a resonance frequency of a nested structure with *N* = 2 single-mode waveguides (e.g., rings), as a function of the coupling coefficient $\mu$. The parameter values for the structure are a radius $R_1$ = 5 mm for the first ring, $R_2$ = 4.994 mm for the second ring (center-to-center distance between rings of 4 $\mu$m),

and a coupling ratio per turn between rings $K = \pi$. $K$ is defined as $2\pi\kappa$, where $\kappa$ is the coupling per radian. An operating wavelength in the vicinity of 1.55 $\mu$m and the same loss coefficient of 0.16 m$^{-1}$ were used in the simulation shown by Figure 32. To achieve phase matching, the effective index of the fundamental mode was taken to be $n_1$ = 1.98 in the first (outer) ring and $n_2$ = 1.9816 in the second (inner) ring. This selection ensured that $\beta_1 R_1 = \beta_2 R_2$. As $\mu$ is increased from zero, the transmission on resonance decreases from unity (no input into the rings when $\mu$ = 0, and therefore all the light comes out at the output port) to zero at some optimum coupling $\mu_{opt}$, then increases again towards unity as $\mu$ is increased from $\mu_{opt}$ to 1. At $\mu = \mu_{opt}$, the light resonates most strongly around the coupled resonators, and the group delay is lowest. For this set of parameter values, $\mu_{opt}$ = 0.0712.

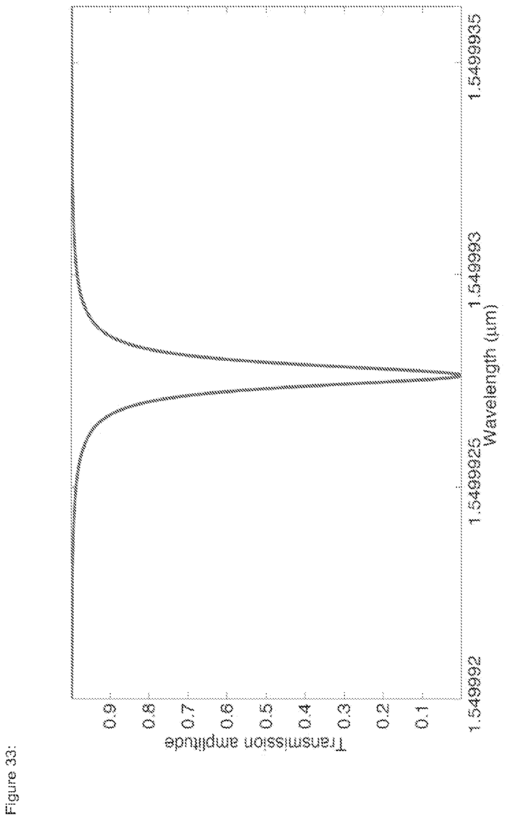

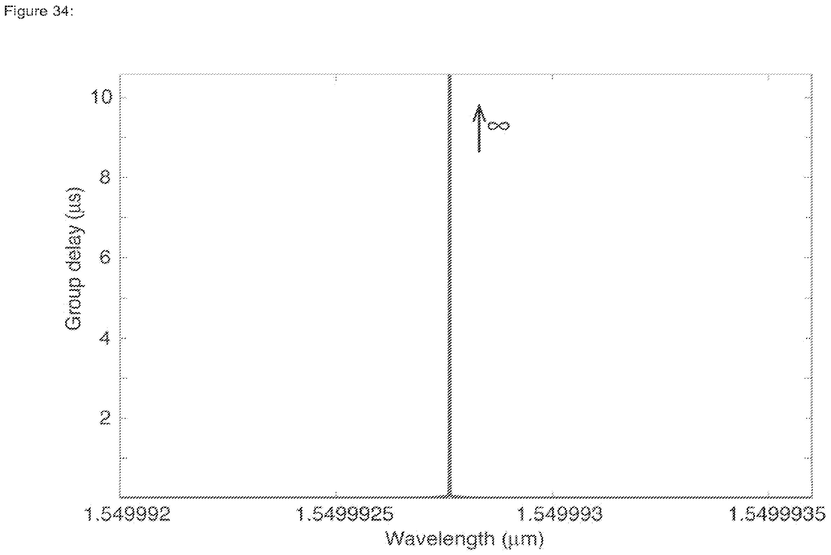

Figure 33 shows the transmission spectrum of the nested structure of Figure 32 operated at $\mu = \mu_{opt}$. The horizontal axis is the phase accumulated around any of the rings in one turn. Figure 33 shows that the resonance in the frequency domain is very narrow. Figure 34 shows the simulated group delay experienced by light in this structure, as a function of optical wavelength, in the vicinity of the same resonance shown in Figure 33.

As in a ring resonator or a spiral optical waveguide, on resonance, the group delay becomes infinite.

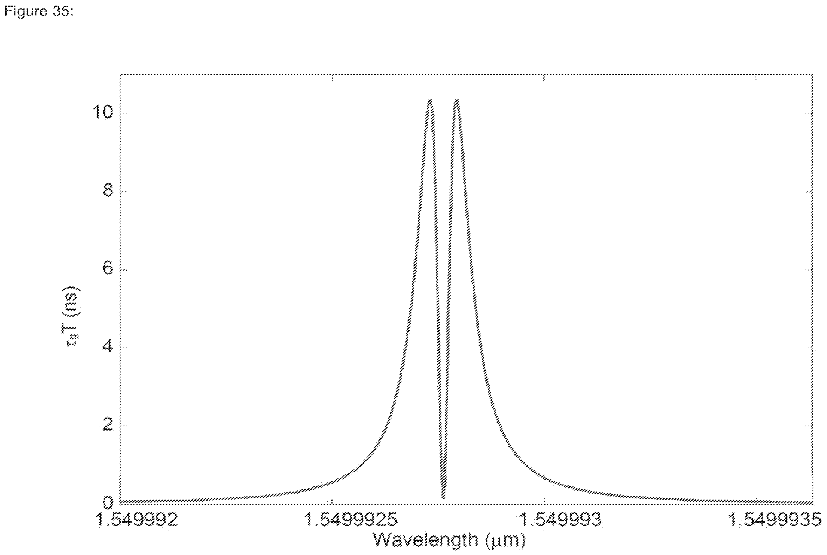

The spectrum of the group delay multiplied by the transmission product (e.g., the product of the spectrum in Figure 33 by the spectrum of Figure 34) is plotted in Figure 35. As in a spiral waveguide, this spectrum exhibits two maxima separated by a deep minimum at the resonance (compare Figure 35 to Figure 10). The two maxima in the $\tau_g T$ product have the same value (e.g., 10.4 ns). When adjusting the values of the coupling coefficients $\mu$ and $K$ until this maximum $\tau_g T$ product reaches its absolute maximum, the value obtained is about 15.8 ns. As expected, this is nominally the same value as for a ring resonator with the same radius of 5 mm and the same loss coefficient (15.9 ns, as mentioned above).

<u>Uses of the optical device</u>

In certain embodiments, an optical device 10 comprising at least one optical waveguide as described herein (e.g., a spiral optical waveguide 12) exhibiting one or more slow-light resonances is used as a sensor configured to measure some quantity $X$, for example a strain, a change in temperature, or a change in refractive index. Light can be launched into the at least one optical waveguide with the light having a wavelength tuned to a transmission spectrum resonance peak or to a portion of a resonance peak in the transmission spectrum having a non-zero slope (e.g., the steepest part of the resonance peak). For example, narrow-linewidth laser light (e.g., laser light having a linewidth significantly narrower than a linewidth of the transmission spectrum resonance peak) can be launched into the at least one optical waveguide.

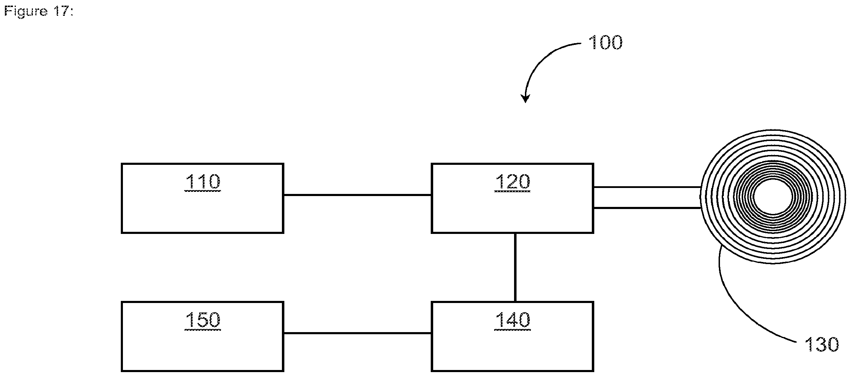

Figure 17 schematically illustrates an example sensor system 100 in accordance with certain embodiments described herein. The sensor system 100 can comprise a light source 110 (e.g., a laser), at least one optical coupler 120, at least one optical waveguide 130 (e.g., a CSW in accordance with the spiral waveguide 12 described herein), and at least one optical detector 140 (e.g., a photo-detector). A small perturbation $dX$ will change the dimensions of the at least one optical waveguide 130 and/or the index of refraction of the materials of the at least one optical waveguide 130 and/or the coupling between the arms of the at least one optical waveguide 130, which will result in a shift in the transmission spectrum of the at least one optical waveguide 130. This shift will result in a change in the power transmitted by the at least one optical waveguide 130, which is detected with the at least one optical detector 140 configured to receive light emitted from the at least one optical waveguide 130 and to generate a signal indicative of the emitted light (e.g., the signal transmitted to a computer system 150).

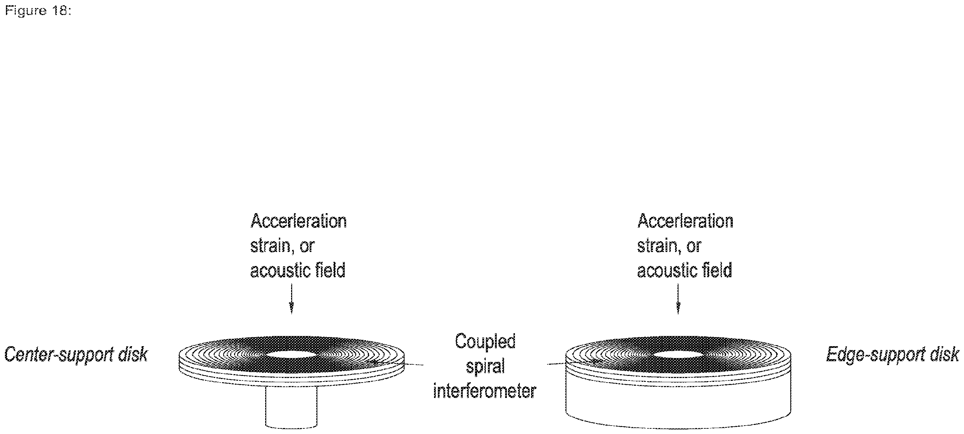

In certain embodiments, at least one optical waveguide 130 (e.g., a spiral optical waveguide 12) is used as a sensor configured to detect mechanisms or parameters that affect the strength of the coupling taking place between the arms. For example, certain embodiments described herein can be used to detect a change in the index of refraction of the material separating the waveguide arms. By coating the waveguide with receptors, certain embodiments described herein can detect biological species that latch onto these receptors, thereby changing the refractive index of the material on top of the waveguide, and therefore the mode and the coupling coefficient. Certain other embodiments can be used to detect acceleration, acoustic field, or strain. For example, as schematically shown in Figure 18, the at least one optical waveguide 130 (e.g., a coupled spiral waveguide 12) can be mounted on a center-supported disk or on an edge-supported disk, and can be used to detect acceleration, strain, or acoustic field. A circular geometry of the at least one optical waveguide 130 can be adapted to detect other measurands (e.g., magnetic field, electrical current, radial strain).

As another example, certain embodiments described herein can alternatively be used to detect a strain. A longitudinal strain applied to the at least one optical waveguide can change (among other things) the spacing between the arms over some of the length of the at least one optical waveguide of certain embodiments, which alters the coupling coefficient and hence the transmission. This change in transmission can be measured to detect, quantify, or recover the strain. Because the arm spacing can be changed over a long distance, by virtue of the configuration of the at least one optical waveguide, this change in coupling coefficient can be integrated over a long distance, resulting in a sizeable effect. In certain embodiments, the same principle can be used to instead measure temperature changes by virtue of structural changes or refractive index changes resulting from changes of temperature of the at least one optical waveguide.

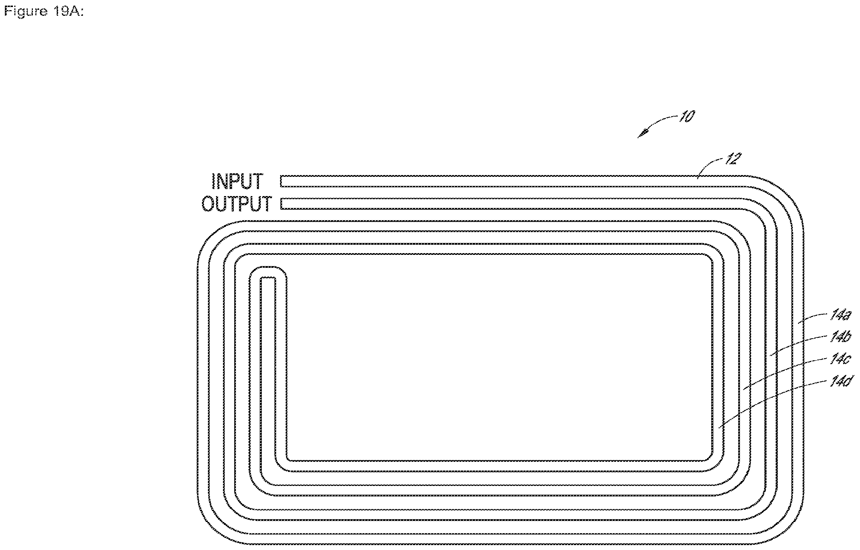

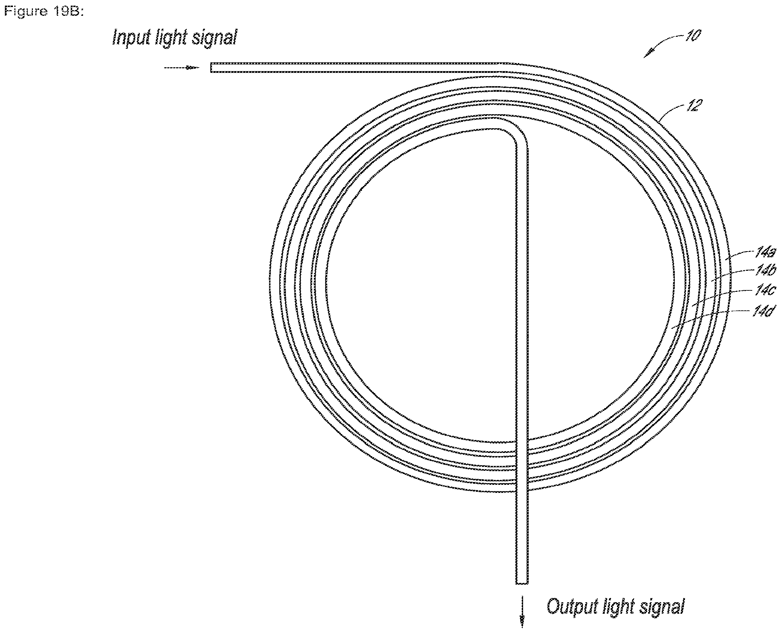

The output of the at least one optical waveguide 130 can be collected in a number of ways in accordance with certain embodiments described herein. One way is to place a detector at the output end of the at least one optical waveguide 130 (e.g., positioned to detect $P_{out}$ of Figure 1A or Figure 8, or $E_{out}$ of Figure IB). Another method is to place a high reflector (e.g., an element having a high reflectivity) at the output end of the at least one optical waveguide 130 and to collect the output at the input port (e.g., using an optical coupler, such as a fiber coupler or a planar coupler). In certain such embodiments, the coupler can be a multilayer coating deposited on the output face of the at least one optical waveguide 130, or can be a Sagnac reflector. In certain embodiments, rather than using a reflector, the at least one optical waveguide 130 can comprise a spiral waveguide 12 that is wrapped through itself, as schematically illustrated by Figure 19A. In certain embodiments, the inner end of the spiral waveguide 12 can extend across the arms of the spiral waveguide 12 (e.g., from a region bounded by the spiral waveguide 12 to a region not bounded by the spiral waveguide 12)(e.g., in a straight line) to bring the light out of the spiral waveguide 12 to the at least one optical detector 140, as schematically illustrated by Figure 19B.

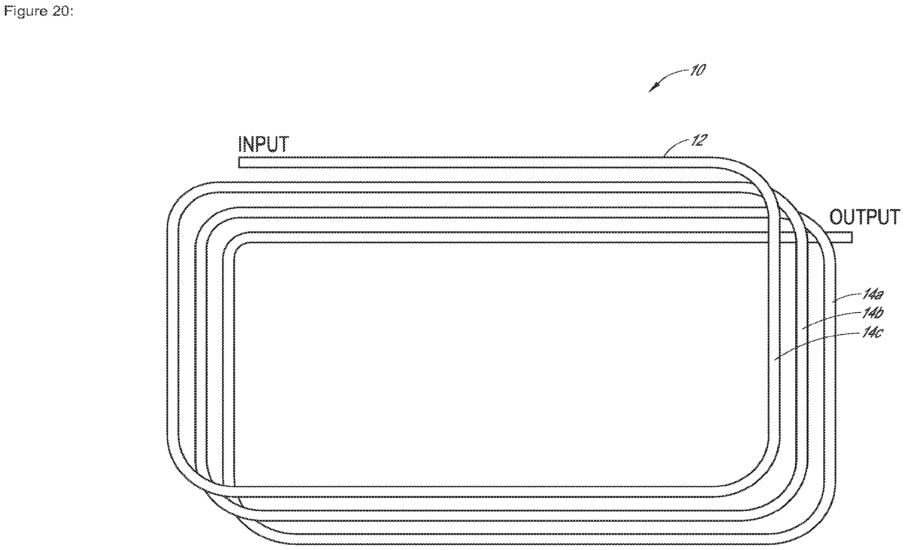

In certain embodiments, the at least one optical optical waveguide 130 can comprise a spiral waveguide 12 having a plurality of offset loops, as schematically illustrated in Figure 20. In certain embodiments, this configuration can have the output end of the spiral waveguide 12 positioned outside the region surrounded by the spiral waveguide 12, making it easier to position the detector against it, or easier to take the output signal to a more remote detector, with either another waveguide or an optical fiber. Another benefit of this offset spiral waveguide configuration is that in certain embodiments, all arms 14 have substantially the same length, and the phase mismatch issue mentioned earlier can disappear or can be greatly reduced. In certain such embodiments, the plurality of offset loops are substantially planar with one another, and portions of the waveguide cross one another, which can induce loss and can make the coupling discontinuous.

The computer system 150 (e.g., controller) can be configured to receive signals from the at least one optical detector 140 and to analyze the received signals to obtain information regarding the perturbations experienced by at least a portion of the spiral waveguide 130.

The computer system 150 can be implemented as electronic hardware, computer software, or combinations of both. To clearly illustrate this interchangeability of hardware and software, the computer system 150 has been described above generally in terms of its functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

The computer system 150 can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor can be a microprocessor, but in the alternative, the processor can be any conventional processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration.

The computer system 150 can be embodied directly in hardware, in a software module executed by a processor, or in a combination of the two. A software module can reside in RAM memory, flash memory, ROM memory, EPROM memory, EEPROM memory, registers, a hard disk, a removable disk, a CD-ROM, or any other form of computer-readable storage medium known in the art. An exemplary tangible, computer-readable storage medium is coupled to a processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

Certain embodiments described herein can be used in a large number of applications. These applications include optical delay lines, spectrometers, biomedical, biochemical, and other sensors, tunable lasers, optical switches, dispersion control devices, and nonlinear optical frequency conversion. The advantages of the spiral waveguide in certain embodiments over existing CROW structures is compactness, as well as the aforementioned advantage of greater sensitivity to coupling between the arms.

Various embodiments have been described above. Although this invention has been described with reference to these specific embodiments, the descriptions are intended to be illustrative and are not intended to be limiting. Various modifications and applications may occur to those skilled in the art without departing from the scope of the invention as defined in the claims.

**Claims**

1. An optical device (10) comprising:

   at least one optical waveguide comprising a plurality of elongate portions (14a, 14b, 14c, 14d, 14e, 14f), wherein light propagates sequentially and generally along the elongate portions (14a, 14b, 14c, 14d, 14e, 14f), wherein at least two elongate portions of the plurality of elongate portions (14a, 14b, 14c, 14d, 14e, 14f) are generally planar with one another and are adjacent and generally parallel to one another, the at least two elongate portions optically coupled to one another such that the light is coupled between the at least two elongate portions in a direction generally perpendicular to the at least two elongate portions as the light propagates generally along the at least two elongate portions,
   **characterized in that** the at least one optical waveguide comprises a spiral optical waveguide (12).

2. The optical device (10) of Claim 1, wherein the at least one optical waveguide comprises a generally rectangular or square shape or an Archimedean spiral or a rigid waveguide.

3. The optical device (10) of Claim 1, wherein the at least two elongate portions are substantially straight and have substantially equal lengths.

4. The optical device (10) of Claim 5, wherein the plurality of elongate portions (14a, 14b, 14c, 14d, 14e, 14f) further comprise two or more elongate portions that are curved and have substantially different lengths, wherein the two or more curved elongate portions have substantially matching phase shifts and the at least two substantially straight elongate portions have a first coupling coefficient between them, and the two or more curved elongate portions have a second coupling coefficient between them, wherein the second coupling coefficient at a wavelength of the light is lower than the first coupling coefficient at the wavelength of the light.

5. The optical device (10) of Claim 1, wherein the plurality of elongate portions (14a, 14b, 14c, 14d, 14e, 14f) comprises two or more elongate portions that are curved and have substantially different lengths and have substantially equal optical lengths.

6. The optical device (10) of Claim 1, wherein the optical device (10) comprises at least one region between the at least two elongate portions, wherein the at least one region comprises a material configured to provide a predetermined coupling coefficient between the at least two elongate portions in the direction generally perpendicular to the at least two elongate portions.

7. The optical device (10) of Claim 1, wherein the at least two elongate portions comprises at least a first elongate portion and a second elongate portion that is adjacent and generally parallel to the first elongate portion, wherein light propagates into the first elongate portion, generally along a length of the first elongate portion, into the second elongate portion, and generally along a length of the second elongate portion, wherein the first and second elongate portions are optically coupled to one another such that the light is coupled between the first and second elongate portions in a direction generally perpendicular to the first and second elongate portions as the light propagates generally along the lengths of the first and second elongate portions, wherein the light undergoes a first phase shift while propagating along the length of the first elongate portion and a second phase shift while propagating along the length of the second elongate portion, wherein the first phase shift is different from the second phase shift.

8. The optical device (10) of Claim 9, wherein a difference between the first phase shift and the second phase shift is a non-zero multiple of $2\pi$, and wherein the light is coupled between the first and second elongate portions in the direction generally perpendicular to the first and second elongate portions with a coupling length less than 300 times a wavelength of the light.

9. The optical device (10) of Claim 1, further comprising:

   at least one optical coupler (120) in optical communication with the at least one optical waveguide, and wherein the at least one optical waveguide extends across an area and comprises at least one portion configured to receive the light from the at least one optical coupler (120) and to emit the light after propagating through the at least one optical waveguide, wherein the at least one portion is positioned at or near an outer boundary of the area; and
   a reflecting portion, wherein the received light propagates from the at least one portion through a first portion of the at least one optical waveguide, reflects from the reflecting portion, propagates through a second portion of the at least one optical waveguide, to the at least one portion.

10. The optical device (10) of Claim 11, wherein the at least one optical waveguide comprises a plurality of loops offset from one another and two or more loops of the plurality of loops cross one another.

11. A method of sensing a perturbation, the method comprising:

inputting light to at least one optical waveguide, the at least one optical waveguide comprising a spiral optical waveguide (12), the at least one optical waveguide comprising a plurality of elongate portions (14a, 14b, 14c, 14d, 14e, 14f), wherein the light propagates sequentially and generally along the elongate portions (14a, 14b, 14c, 14d, 14e, 14f), wherein at least two elongate portions of the plurality of elongate portions (14a, 14b, 14c, 14d, 14e, 14f, 22a, 22b) are generally planar with one another and are adjacent and generally parallel to one another, the at least two elongate portions optically coupled to one another such that the light is coupled between the at least two elongate portions in a direction generally perpendicular to the at least two elongate portions as the light propagates generally along the at least two elongate portions; and
detecting at least a portion of the light transmitted from the at least one optical waveguide.

12. The method of Claim 13, wherein the perturbation comprises at least one of a change of a strain applied to at least a portion of the at least one optical waveguide, a change of a temperature applied to at least a portion of the at least one optical waveguide, and a change of a refractive index of at least a portion of the at least one optical waveguide.

13. The method of Claim 13, wherein the light is laser light having a wavelength at a transmission spectrum peak of the at least one optical waveguide or on a side of the transmission spectrum peak having a non-zero slope and having a linewidth narrower than a linewidth of the transmission spectrum peak.

**Patentansprüche**

1. Optische Vorrichtung (10), die Folgendes umfasst:

mindestens einen optischen Wellenleiter, der eine Vielzahl von langgestreckten Teilen (14a, 14b, 14c, 14d, 14e, 14 f) umfasst, wobei sich Licht sequenziell und allgemein entlang der langgestreckten Teile (14a, 14b, 14c, 14d, 14e, 14 f) ausbreitet, wobei mindestens zwei langgestreckte Teile der Vielzahl von langgestreckten Teilen (14a, 14b, 14c, 14d, 14e, 14f) im Allgemeinen planar zueinander und benachbart und im Allgemeinen parallel zueinander sind, die mindestens zwei langgestreckten Teile optisch so miteinander gekoppelt sind, dass sich das Licht zwischen den mindestens zwei langgestreckten Teilen in einer Richtung ausbreitet, die im Allgemeinen rechtwinklig zu den mindestens zwei langgestreckten Teilen liegt, während sich das Licht im Allgemeinen entlang der mindestens zwei langgestreckten Teile ausbreitet,
dadurch charakterisiert, dass der mindestens eine optische Wellenleiter einen spiralförmigen optischen Wellenleiter (12) enthält.

2. Optische Vorrichtung (10) nach Anspruch 1, wobei der mindestens eine optische Wellenleiter eine allgemein rechteckige oder viereckige Form oder eine archimedische Spirale oder einen steifen Wellenleiter umfasst.

3. Optische Vorrichtung (10) nach Anspruch 1, wobei die mindestens zwei langgestreckten Teile im Wesentlichen gerade sind und im Wesentlichen gleiche Längen haben.

4. Optische Vorrichtung (10) nach Anspruch 5, wobei die Vielzahl der langgestreckten Teile (14a, 14b, 14c, 14d, 14e, 14f) weiterhin zwei oder mehr langgestreckte Teile umfasst, die gebogen sind und wesentlich unterschiedliche Längen haben, wobei die zwei oder mehr gebogenen langgestreckten Teile im Wesentlichen übereinstimmende Phasenverschiebungen haben und die mindestens zwei im Wesentlichen geraden langgestreckten Teile einen ersten Kopplungskoeffizienten zwischen sich haben, und die zwei oder mehr gebogenen langgestreckten Teile einen zweiten Kopplungskoeffizienten zwischen sich haben, wobei der zweite Kopplungskoeffizient bei einer Wellenlänge des Lichts geringer als der erste Kopplungskoeffizient bei der Wellenlänge des Lichts ist.

5. Optische Vorrichtung (10) nach Anspruch 1, wobei die Vielzahl langgestreckter Teile (14a, 14b, 14c, 14d, 14e, 14f) zwei oder mehr langgestreckte Teile umfasst, die gebogen sind und wesentlich verschiedene Längen und im Wesentlichen gleiche optische Längen haben.

6. Optische Vorrichtung (10) nach Anspruch 1, wobei die optische Vorrichtung (10) mindestens eine Region zwischen den mindestens zwei langgestreckten Teilen umfasst, wobei die mindestens eine Region ein Material beinhaltet, das konfiguriert ist, um einen vorbestimmten Kopplungskoeffizienten zwischen den mindestens zwei langgestreckten Teilen in der im Allgemeinen rechtwinkligen Richtung zu den mindestens zwei langgestreckten Teilen bereitzustellen.

7. Optische Vorrichtung (10) nach Anspruch 1, wobei die mindestens zwei langgestreckten Teile mindestens einen ersten langgestreckten Teil und einen zweiten langgestreckten Teil umfassen, der benachbart und im Allgemeinen parallel zu dem ersten langgestreckten Teil ist, wobei sich das Licht in den ersten langgestreckten Teil ausbreitet, im Allgemeinen entlang einer Länge des ersten langgestreckten Teils in den zweiten langgestreckten Teil, und im Allgemeinen entlang einer Länge des zweiten langgestreckten Teils, wobei die ersten und zweiten langgestreckten Teile optisch miteinander gekoppelt sind, so dass das Licht zwischen den ersten und zweiten langgestreckten Teilen in einer Richtung gekoppelt ist, die im Allgemeinen rechtwinklig zu den ersten und zweiten langgestreckten Teilen liegt, während sich das Licht im Allgemeinen entlang der Längen der ersten und zweiten langgestreckten Teile ausbreitet, wobei das Licht eine erste Phasenverschiebung durchläuft, während es sich entlang der Länge des ersten langgestreckten Teils ausbreitet, und ein zweite Phasenverschiebung durchläuft, während es sich entlang der Länge des zweiten langgestreckten Teils ausbreitet, wobei die erste Phasenverschiebung sich von der zweiten Phasenverschiebung unterscheidet.

8. Optische Vorrichtung (10) nach Anspruch 9, wobei ein Unterschied zwischen der ersten Phasenverschiebung und der zweiten Phasenverschiebung ein Nicht-Null-Vielfaches von $2\pi$ ist und wobei das Licht zwischen den ersten und zweiten langgestreckten Teilen in der im Allgemeinen rechtwinkligen Richtung zu den ersten und zweiten langgestreckten Teilen gekoppelt ist, mit einer Kopplungslänge von weniger als dem 300 -fachen einer Wellenlänge des Lichts.

9. Optische Vorrichtung (10) nach Anspruch 1, weiterhin Folgendes umfassend:

mindestens einem optischen Koppler (120) in optischer Kommunikation mit dem mindestens einen optischen Wellenleiter, und wobei der mindestens eine optische Wellenleiter sich über einen Bereich erstreckt und mindestens einen Teil umfasst, der zum Empfang des Lichts von dem mindestens einen optischen Koppler (120) und zum Abstrahlen des Lichts nach der Ausbreitung durch den mindestens einen optischen Wellenleiter konfiguriert ist, wobei der mindestens eine Teil an oder in der Nähe einer Außengrenze des Bereichs positioniert ist; und
einen Reflexionspunkt, wobei das empfangene Licht sich von dem mindestens einen Teil durch einen ersten Teil des mindestens einen optischen Wellenleiters ausbreitet, von dem Reflexionspunkt reflektiert wird und sich durch einen zweiten Teil des mindestens einen optischen Wellenleiters zu dem mindestens einen Teil ausbreitet.

10. Optische Vorrichtung (10) nach Anspruch 11, wobei mindestens ein optischer Wellenleiter eine Vielzahl von voneinander versetzten Schleifen umfasst und zwei oder mehr Schleifen der Vielzahl von Schleifen einander kreuzen.

11. Verfahren zur Erfassung einer Störung, das Verfahren Folgendes umfassend:

Eingeben von Licht in mindestens einen optischen Wellenleiter, wobei der mindestens eine optische Wellenleiter einen spiralförmigen optischen Wellenleiter (12) umfasst, der mindestens eine optische Wellenleiter eine Vielzahl von langgestreckten Teilen (14a, 14b, 14c, 14d, 14e, 14f) umfasst, wobei sich Licht sequenziell und allgemein entlang der langgestreckten Teile (14a, 14b, 14c, 14d, 14e, 14 f) ausbreitet, wobei mindestens zwei langgestreckte Teile der Vielzahl von langgestreckten Teilen (14a, 14b, 14c, 14d, 14e, 14f, 22a, 22b) im Allgemeinen planar zueinander und benachbart und im Allgemeinen parallel zueinander sind, die mindestens zwei langgestreckten Teile optisch so miteinander gekoppelt sind, dass sich das Licht zwischen den mindestens zwei langgestreckten Teilen in einer Richtung ausbreitet, die im Allgemeinen rechtwinklig zu den mindestens zwei langgestreckten Teilen liegt, während sich das Licht im Allgemeinen entlang der mindestens zwei langgestreckten Teile ausbreitet, und
Erfassung von mindestens einem Teil des Lichts, das von dem mindestens einen optischen Wellenleiter übertragen wird.

12. Verfahren nach Anspruch 13, wobei die Störung mindestens eine von einer Änderung einer Belastung, die auf mindestens einen Teil des mindestens einen optischen Wellenleiters aufgeübt wird, einer Änderung einer Temperatur, die auf mindestens einen Teil des mindestens einen optischen Wellenleiters angewendet wird und einer Änderung eines Brechungsindex von mindestens einem Teil des mindestens einen optischen Wellenleiters umfasst.

**13.** Verfahren nach Anspruch 13, wobei das Licht Laserlicht mit einer Wellenlänge an einem Übertragungsspektrum-Spitzenwerts des mindestens einen optischen Wellenleiters oder an einer Seite des Übertragungsspektrum-Spitzenwerts mit einer Neigung von nicht Null und einer Linienbreite von weniger als eine Linienbreite des Übertragungsspektrum-Spitzenwerts ist.

**Revendications**

**1.** Dispositif optique (10), comprenant :

au moins un guide d'onde optique comprenant une pluralité de parties allongées (14a, 14b, 14c, 14e, 14f), dans lequel de la lumière se propage de manière séquentielle et essentiellement le long des parties allongées (14a, 14b, 14c, 14e, 14f), dans lequel au moins deux parties allongées parmi la pluralité de parties allongées (14a, 14b, 14c, 14e, 14f) sont essentiellement planaires les unes aux autres et sont adjacentes et essentiellement parallèles les unes par rapport aux autres, les au moins deux parties allongées étant couplées de manière optique les unes par rapport aux autres de sorte que la lumière est couplée entre les au moins deux parties allongées dans une direction essentiellement perpendiculaire aux au moins deux parties allongées lorsque la lumière se propage essentiellement le long des au moins deux parties allongées,
**caractérisé en ce que** le au moins un guide d'onde optique comprend un guide d'onde optique hélicoïdal (12).

**2.** Dispositif optique (10) selon la revendication 1, dans lequel le au moins un guide d'onde optique est constitué d'une forme essentiellement rectangulaire ou carrée ou d'une vis d'Archimède ou d'un guide d'onde rigide.

**3.** Dispositif optique (10) selon la revendication 1, dans lequel les au moins deux parties allongées sont essentiellement droites et présentent des longueurs essentiellement égales.

**4.** Dispositif optique (10) selon la revendication 5, dans lequel la pluralité de parties allongées (14a, 14b, 14c, 14e, 14f) comprennent en outre deux ou plus de deux parties allongées qui sont courbes et présentent des longueurs essentiellement différentes, dans lequel les deux ou plus de deux parties allongées courbes présentent des décalages de phase essentiellement correspondants et les au moins deux parties allongées essentiellement droites présentent un premier coefficient de couplage entre elles, et les deux ou plus de deux parties allongées courbes présentent un deuxième coefficient de couplage entre elles, dans lequel le deuxième coefficient de couplage pour une longueur d'onde de la lumière est inférieur au premier coefficient de couplage pour ladite longueur d'onde de la lumière.

**5.** Dispositif optique (10) selon la revendication 1, dans lequel la pluralité de parties allongées (14a, 14b, 14c, 14e, 14f) comprennent deux ou plus de deux parties allongées qui sont courbes et qui présentent des longueurs essentiellement différentes et qui présentent des longueurs optiques essentiellement égales.

**6.** Dispositif optique (10) selon la revendication 1, dans lequel le dispositif optique (10) comprend au moins une région entre les au moins deux parties allongées, dans lequel la au moins une région comprend un matériau configuré pour fournir un coefficient de couplage prédéterminé entre les au moins deux parties allongées dans la direction essentiellement perpendiculairement aux au moins deux parties allongées.

**7.** Dispositif optique (10) selon la revendication 1, dans lequel les au moins deux parties allongées comprennent au moins une première partie allongée et une deuxième partie allongée qui est adjacente et essentiellement parallèle à la première partie allongée, dans lequel de la lumière se propage dans la première partie allongée, essentiellement le long d'une longueur de la première partie allongée, jusque dans la deuxième partie allongée, et essentiellement le long d'une longueur de la deuxième partie allongée, dans lequel les première et deuxième parties allongées sont couplées de manière optique l'une à l'autre de sorte que la lumière est couplée entre les première et deuxième parties allongées dans une direction essentiellement perpendiculaire aux première et deuxième parties allongées lorsque la lumière se propage essentiellement le long des longueurs des première et deuxième parties allongées, dans lequel la lumière subit un premier décalage de phase en se propageant le long de la longueur de la première partie allongée et un deuxième décalage de phase en se propageant le long de la longueur de la deuxième partie allongée, dans lequel le premier décalage de phase est différent du deuxième décalage de phase.

**8.** Dispositif optique (10) selon la revendication 9, dans lequel une différence entre le premier décalage de phase et le deuxième décalage de phase est un multiple non nul de $2\pi$, et dans lequel la lumière est couplée entre les première et deuxième parties allongées dans la direction essentiellement perpendiculaire aux première et deuxième parties allongées avec une longueur de couplage inférieure à 300 fois une longueur d'onde de la lumière.

**9.** Dispositif optique (10) selon la revendication 1, comprenant en outre :

au moins un coupleur optique (120) en communication optique avec le au moins un guide d'onde optique, et dans lequel le au moins un guide d'onde optique s'étend sur une surface et comprend au moins une partie configurée pour recevoir la lumière en provenance du au moins un coupleur optique (120) et pour émettre la lumière après propagation à travers le au moins un guide d'onde optique, dans lequel la au moins une partie est positionnée au niveau ou à proximité d'une limite extérieure de la zone ; et
une partie réfléchissante, dans lequel la lumière reçue se propage à partir de la au moins une partie à travers une première partie du au moins un guide d'onde optique, est réfléchie par la partie réfléchissante, se propage à travers une deuxième partie du au moins un guide d'onde optique, vers ladite au moins une partie.

**10.** Dispositif optique (10) selon la revendication 11, dans lequel le au moins un guide d'onde optique comprend une pluralité de boucles décalées les unes par rapport aux autres et deux ou plus de deux boucles parmi la pluralité de boucles se croisent les unes les autres.

**11.** Procédé de détection d'une perturbation, le procédé comprenant les étapes consistant à :

injecter de la lumière dans au moins un guide d'onde optique, le au moins un guide d'onde optique comprenant un guide d'onde optique hélicoïdal (12), le au moins un guide d'onde optique hélicoïdal comprenant une pluralité de parties allongées (14a, 14b, 14c, 14d, 14e, 14f), dans lequel la lumière se propage de manière séquentielle et essentiellement le long des parties allongées (14a, 14b, 14c, 14d, 14e, 14f), dans lequel au moins deux parties allongées parmi la pluralité de parties allongées (14a, 14b, 14c, 14d, 14e, 14f, 22a, 22b) sont essentiellement planaires les unes par rapport aux autres et sont adjacentes et essentiellement parallèles les unes par rapport aux autres, les au moins deux parties allongées étant couplées de manière optique les unes aux autres de sorte que la lumière est couplée entre les au moins deux parties allongées dans une direction essentiellement perpendiculaire aux au moins deux parties allongées lorsque la lumière se propage essentiellement le long des au moins deux parties allongées ; et
détecter au moins une partie de la lumière émise par le au moins un guide d'onde optique.

**12.** Procédé selon la revendication 13, dans lequel la perturbation comprend au moins une parmi une modification d'une contrainte appliquée à au moins une partie du au moins un guide d'onde optique, une modification d'une température appliquée à au moins une partie du au moins un guide d'onde optique, et une modification d'un indice de réfraction d'au moins une partie du au moins un guide d'onde optique.

**13.** Procédé selon la revendication 13, dans lequel la lumière est une lumière laser présentant une longueur d'onde située au niveau d'un pic de spectre d'émission du au moins un guide d'onde optique ou sur un côté du pic de spectre d'émission présentant une pente non nulle et présentant une largeur spectrale inférieure à une largeur spectrale du pic de spectre d'émission.

Figure 1A:

EP 2 951 628 B1

Figure 1B:

*FIG. 1B*

Continuous
intra-arm optical
coupling

Radial energy exchange
between arms

$E_{in}$

$E_{out}$

*10*

*12*

*14a*
*14b*
*14c*
*14d*
*14e*
*14f*

EP 2 951 628 B1

Figure 3:

Figure 4A:

Group delay

Transmission

Wavelength (nm)

1550.0088  1550.0092  1550.0096  1550.0100  1550.0104

Figure 4B:

EP 2 951 628 B1

Figure 5:

Figure 6:

EP 2 951 628 B1

Transmission T

Coupling coefficient κ (mm⁻¹)

Figure 7A:

Figure 7B:

EP 2 951 628 B1

Figure 8:

$P_{in}$

$P_{out}$

10

12

14a
14b
14c
14d

A
B
C
D

35

Figure 9:

EP 2 951 628 B1

Figure 10:

Figure 11A:

EP 2 951 628 B1

Figure 11B:

Figure 11C:

EP 2 951 628 B1

Figure 11D:

Figure 12:

EP 2 951 628 B1

Figure 13:

EP 2 951 628 B1

Figure 14:

EP 2 951 628 B1

Figure 15:

EP 2 951 628 B1

EP 2 951 628 B1

Figure 16:

Figure 17:

Figure 18:

Center-support disk

Accerleration
strain, or
acoustic field

Coupled
spiral
interferometer

Accerleration
strain, or
acoustic field

Edge-support disk

EP 2 951 628 B1

Figure 19A:

EP 2 951 628 B1

Figure 19B:

Input light signal

10

12

14a
14b
14c
14d

Output light signal

EP 2 951 628 B1

Figure 20:

Figure 21:

Figure 22:

EP 2 951 628 B1

Figure 23:

Figure 24:

EP 2 951 628 B1

Figure 25:

EP 2 951 628 B1

Figure 26:

Figure 27:

EP 2 951 628 B1

Figure 28:

Figure 29:

EP 2 951 628 B1

Figure 30:

$E_{in} \rightarrow$

$E_{out} \rightarrow$

10

122

μ

22

κ

22b

22a

$K=2\pi\kappa$

$\Phi=\beta S$

EP 2 951 628 B1

Figure 31:

Figure 32:

Figure 33:

EP 2 951 628 B1

Figure 34:

Figure 35:

EP 2 951 628 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. V. HAU ; S. E. HARRIS ; Z. DUTTON ; C. H. BEHROOZI.** Light speed reduction to 17 metres per second in an ultracold atomic gas. *Nature,* 1999, vol. 397, 594
- **F. MORICHETTI ; A. CANCIAMILLA ; C. FERRARI ; A. SAMARELLI ; M. SOREL ; A. MELLONI.** Travelling-wave resonant four-wave mixing breaks the limits of cavity-enhanced all-optical wavelength conversion. *Nature Comm,* May 2011, vol. 2, 296
- **J.K.S. POON ; J. SCHEUER ; S. MOOKHERJEA ; G.T. PALOCZI ; Y.Y. HUANG ; A. YARIV.** Matrix analysis of microring coupled-resonator optical waveguides. *Opt. Express,* January 2004, vol. 12 (1), 90-103
- **F. MORICHETTI ; A. MELLONI ; A. BREDA ; A. CANCIAMILLA ; C. FERRARI ; M. MARTINELLI.** A reconfigurable architecture for continuously variable optical slow-wave delay lines. *Opt. Express,* December 2007, vol. 15 (25), 17273-17282
- **K.S. POON ; J. SCHEUER ; Y. XU ; A. YARIV.** Designing coupled-resonator optical waveguide delay lines. *J. Opt. Soc. Am. B,* September 2004, vol. 21 (9), 1665-1673
- **F. XIA ; L. SEKARIC ; Y. VLASOV.** Ultracompact optical buffers on a silicon chip. *Nature Photonics,* January 2007, vol. 1, 65-71
- **T. BARWICZ ; M. A. POPOVI'C ; M.R. WATTS ; P.T. RAKICH ; E.P. IPPEN ; H.I. SMITH.** Fabrication of Add-Drop Filters Based on Frequency-Matched Microring Resonators. *J. of Lightwave Technol,* May 2006, vol. 24 (5), 2207-2218
- **B.E. LITTLE ; S.T. CHU ; P.P. ABSIL ; J.V. HRYNIEWICZ ; F.G. JOHNSON ; F. SEIFERTH ; D. GILL ; V. VAN ; O. KING ; M. TRAKALO.** Very high-order microring resonator filters for WDM applications. *IEEE Photonics Technol. Lett.,* October 2004, vol. 16 (10), 2137-2139
- **T. LEI ; A.W. POON.** Modeling of coupled-resonator optical waveguide (CROW) based refractive index sensors using pixelized spatial detection at a single wavelength. *Opt. Express,* October 2011, vol. 19 (22), 22227-22241
- **F. MORICHETTI ; A. CANCIAMILLA ; C. FERRARI ; A. SAMARELLI ; M. SOREL ; A. MELLONI.** Travelling-wave resonant four-wave mixing breaks the limits of cavity-enhanced all-optical wavelength conversion. *Nature Comm.,* May 2011, vol. 2, 296

- **T. BARWICZ ; M. A. POPOVI'C ; M.R. WATTS ; P.T. RAKICH ; E.P. IPPEN ; H.I. SMITH.** Fabrication of Add-Drop Filters Based on Frequency-Matched Microring Resonators. *J. of Lightwave Technol.,* May 2006, vol. 24 (5), 2207-2218
- **M.J.F. DIGONNET ; H. WEN ; M.A. TERREL ; S. FAN.** Slow Light in Fiber Sensors,'' in Advances in Slow and Fast Light V. *Photonics West, San Francisco, California, SPIE Proc.,* January 2012, vol. 8273, 82730W
- **H. WEN ; G. SKOLIANOS ; S. FAN ; M. BERNIER ; R. VALLÉE ; M.J.F. DIGONNET.** Slow-light fiber-Bragg-grating strain sensor with a 280-femtostrain/√Hz resolution. *J. of Lightwave Technol.,* 2012
- **H. WEN ; M. TERREL ; S. FAN ; M.J.F. DIGONNET.** Sensing with slow light in fiber Bragg gratings. *IEEE Sensors J,* January 2012, vol. 12 (1), 156-163
- **C. DELEZOIDE et al.** Vertically coupled polymer microracetrack resonators for label-free biochemical sensors. *Photonics Technol. Lett.,* February 2012, vol. 24 (4), 270-272
- **M. SUMETSKY.** Optical fiber microcoil resonator. *Opt. Express,* May 2004, vol. 12 (10), 2303-2316
- **M. SUMETSKY.** Uniform coil optical resonator and waveguide: transmission spectrum, eigenmodes, and dispersion relation. *Opt. Express,* 2005, vol. 13 (11), 4331-4340
- **M. SUMETSKY ; Y. DULASHKO ; M. FISHTEYN.** Demonstration of a multi-turn microfiber coil resonator,'' In Postdeadline papers. *Proc. of Optical Fiber Comm. Conf.,* 2007
- **M. SUMETSKY ; Y. DULASHKO ; M. FISHTEYN.** Demonstration of a multi-turn microfiber coil resonator,'' in Postdeadline papers. *Proc. of Optical Fiber Comm. Conf.,* 2007
- **J.F. BAUTERS ; M.J.R. HECK ; D.D. JOHN ; J.S. BARTON ; D.J. BLUMENTHAL ; J.E. BOWERS.** A comparison of approaches for ultra-low-loss waveguides. *Optical Fiber Communication Conference and Exposition (OFC/NFOEC),* 2012
- **Y. MURAKAMI.** Coupling between curved dielectric waveguides. *Appl. Opt.,* 1980, vol. 19, 398-403
- **Y. MURAKAMI ; S. SUDO.** Coupling characteristics measurements between curved waveguides using a two-core fiber coupler. *Appl. Opt.,* 1981, vol. 20, 417-422

- **H. WEN ; G. SKOLIANOS ; M. J.F. DIGONNET ; S. FAN.** Slow Light in Fiber Bragg Gratings. *Photonics West, San Francisco, California, Proc. of SPIE,* January 2011, vol. 7949, 79490-E1, E11
- **J F. BAUTERS ; M.J.R. HECK ; D.D. JOHN ; J.S. BARTON ; D.J. BLUMENTHAL ; J.E. BOWERS.** A comparison of approaches for ultra-low-loss waveguides. *Optical Fiber Communication Conference and Exposition (OFC/NFOEC),* 2012
- **A.L. JONES.** Coupling of optical fibers and scattering in fibers. *J. Opt. Soc. Am.,* March 1965, vol. 55 (3), 261-269
- **H. WEN ; G. SKOLIANOS ; S. FAN ; M. BERNIER ; R. VALLÉE ; M. J. F. DIGONNET.** Slow-light fiber-Bragg-grating strain sensor with a 280-femtostrain/√Hz resolution. *J. of Lightwave Technol.,* 2012
- **H. WEN ; G. SKOLIANOS ; M.J.F. DIGONNET ; S. FAN.** Slow Light in Fiber Bragg Gratings. *Photonics West, San Francisco, California, Proc. of SPIE,* January 2011, vol. 7949, 79490-E1, E11